# EUROPEAN PATENT APPLICATION

(11) **EP 4 518 539 A1**
(43) Date of publication of application: **05.03.2025**
(21) Application number: 23796893.8
(22) Date of filing: 28.04.2023
(51) Int. Cl.: H04W 72/25, H04W 56/00, H04W 72/04, H04W 74/08, H04W 92/18

(54) **METHOD AND DEVICE FOR PERFORMING SIDELINK COMMUNICATION IN UNLICENSED BAND**

(30) Priority: 28.04.2022 US 202263336293 P; 06.04.2023 US 202363457793 P
(71) Applicant: LG Electronics Inc., Yeongdeungpo-gu Seoul 07336 (KR)
(72) Inventor: LEE, Seungmin, Seoul 06772 (KR); HWANG, Daesung, Seoul 06772 (KR); LEE, Youngdae, Seoul 06772 (KR); YANG, Suckchel, Seoul 06772 (KR); KIM, Seonwook, Seoul 06772 (KR)
(74) Representative: Plasseraud IP
(86) International application number: PCT/KR2023/005909
(87) International publication number: WO 2023/211254

(57) **Abstract**

A method by which a first device performs wireless communication and a device supporting same are provided. The method may comprise the steps of: acquiring information related to a resource for a sidelink-synchronization signal block (S-SSB); acquiring information about a first time domain for a first cyclic prefix extension (CPE) related to S-SSB transmission; performing the first CPE during the first time domain before the S-SSB transmission; and performing the S-SSB transmission on the basis of the resource.

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of a base station. SL communication is under consideration as a solution to the overhead of a base station caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR).

### DISCLOSURE

### TECHNICAL SOLUTION

In an embodiment, provided is a method for performing wireless communication by a first device. The method may comprise: obtaining information related to a resource for sidelink-synchronization signal block (S-SSB); obtaining information on a first time domain for a first cyclic prefix extension (CPE) related to S-SSB transmission; performing the first CPE during the first time domain before the S-SSB transmission; and performing the S-SSB transmission based on the resource.

In an embodiment, provided is a first device adapted to perform wireless communication. The first device may comprise: at least one transceiver; at least one processor; and at least one memory connected to the at least one processor and storing instructions that, based on being executed by the at least one processor, cause the first device to perform operations comprising: obtaining information related to a resource for sidelink-synchronization signal block (S-SSB); obtaining information on a first time domain for a first cyclic prefix extension (CPE) related to S-SSB transmission; performing the first CPE during the first time domain before the S-SSB transmission; and performing the S-SSB transmission based on the resource.

In an embodiment, provided is a processing device adapted to control a first device. The processing device may comprise: at least one processor; and at least one memory connected to the at least one processor and storing instructions that, based on being executed by the at least one processor, cause the first device to perform operations comprising: obtaining information related to a resource for sidelink-synchronization signal block (S-SSB); obtaining information on a first time domain for a first cyclic prefix extension (CPE) related to S-SSB transmission; performing the first CPE during the first time domain before the S-SSB transmission; and performing the S-SSB transmission based on the resource.

In an embodiment, provided is a non-transitory computer-readable storage medium storing instructions. The instructions, when executed, may cause a first device to perform operations comprising: obtaining information related to a resource for sidelink-synchronization signal block (S-SSB); obtaining information on a first time domain for a first cyclic prefix extension (CPE) related to S-SSB transmission; performing the first CPE during the first time domain before the S-SSB transmission; and performing the S-SSB transmission based on the resource.

### BRIEF DESCRIPTION OF THE DRAWINGS

FIG. 1 shows a communication structure providable in a 6G system, based on an embodiment of the present disclosure.
FIG. 2 shows an electromagnetic spectrum, based on an embodiment of the present disclosure.
FIG. 3 shows a structure of an NR system, based on an embodiment of the present disclosure.
FIG. 4 shows a radio protocol architecture, based on an embodiment of the present disclosure.
FIG. 5 shows a structure of a radio frame of an NR, based on an embodiment of the present disclosure.
FIG. 6 shows a structure of a slot of an NR frame, based on an embodiment of the present disclosure.
FIG. 7 shows an example of a BWP, based on an embodiment of the present disclosure.
FIG. 8 shows a procedure of performing V2X or SL communication by a UE based on a transmission mode, based on an embodiment of the present disclosure.
FIG. 9 shows three cast types, based on an embodiment of the present disclosure.
FIG. 10 shows an interlaced RB, based on an embodiment of the present disclosure.
FIG. 11 shows a procedure for a UE to perform SL communication in an unlicensed band, based on an embodiment of the present disclosure.
FIG. 12 is an illustration for explaining a problem caused by different CPEs.
FIG. 13 is an illustration for explaining a problem caused by different CPEs.
FIG. 14 shows a gap for UE common LBT operation in front of the PSFCH resource (e.g., symbol), based on an embodiment of the present disclosure.
FIG. 15 shows a gap for the UE common LBT operation in front of the SL SSB resource (e.g., slot), based on an embodiment of the present disclosure.
FIG. 16 shows a method for performing SL communication in an unlicensed band, based on an embodiment of the present disclosure.
FIG. 17 shows a method for performing SL communication in an unlicensed band, based on an embodiment of the present disclosure.
FIG. 18 shows a method for performing SL communication in an unlicensed band, based on an embodiment of the present disclosure.
FIG. 19 shows a method for performing SL communication in an unlicensed band, based on an embodiment of the present disclosure.
FIG. 20 shows a method for performing SL communication in an unlicensed band, based on an embodiment of the present disclosure.
FIG. 21 shows a method for performing SL communication in an unlicensed band, based on an embodiment of the present disclosure.
FIG. 22 shows a method for a first device to perform wireless communication, based on an embodiment of the present disclosure.
FIG. 23 shows a method for a second device to perform wireless communication, based on an embodiment of the present disclosure.
FIG. 24 shows a communication system 1, based on an embodiment of the present disclosure.
FIG. 25 shows wireless devices, based on an embodiment of the present disclosure.
FIG. 26 shows a signal process circuit for a transmission signal, based on an embodiment of the present disclosure.
FIG. 27 shows another example of a wireless device, based on an embodiment of the present disclosure.
FIG. 28 shows a hand-held device, based on an embodiment of the present disclosure.
FIG. 29 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile internet, high throughput, high network capacity, high energy efficiency, low backhaul and access network congestion, and enhanced data security.

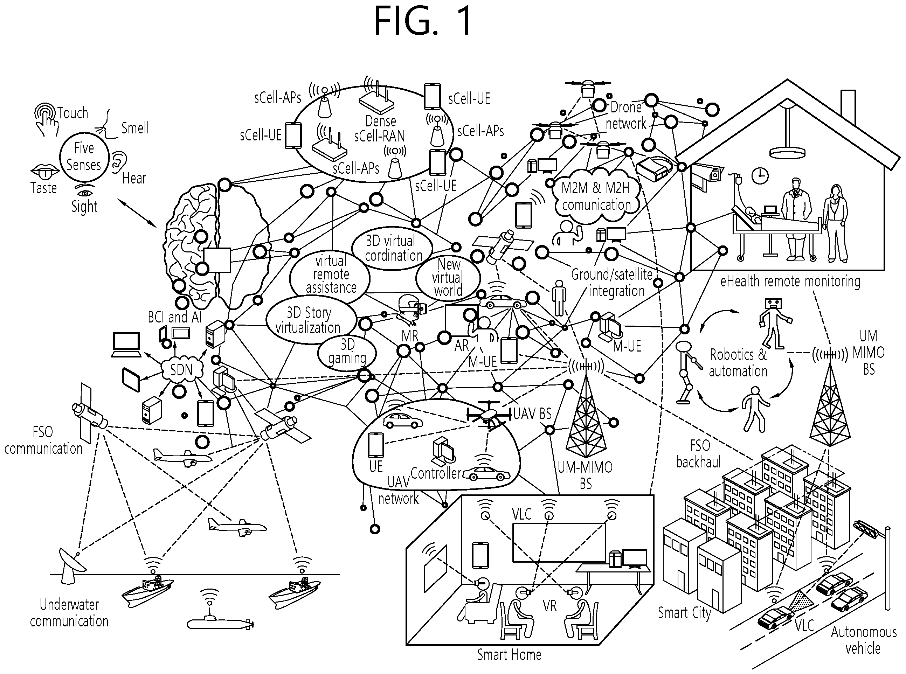

FIG. 1 shows a communication structure providable in a 6G system, based on an embodiment of the present disclosure. The embodiment of FIG. 1 may be combined with various embodiments of the present disclosure.

The 6G system will have 50 times higher simultaneous wireless communication connectivity than a 5G wireless communication system. URLLC, which is the key feature of 5G, will become more important technology by providing end-to-end latency less than 1 ms in 6G communication. The 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In 6G, new network characteristics may be as follows.
- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5 GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduces costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5 GB network in order to ensure flexibility, reconfigurability and programmability.

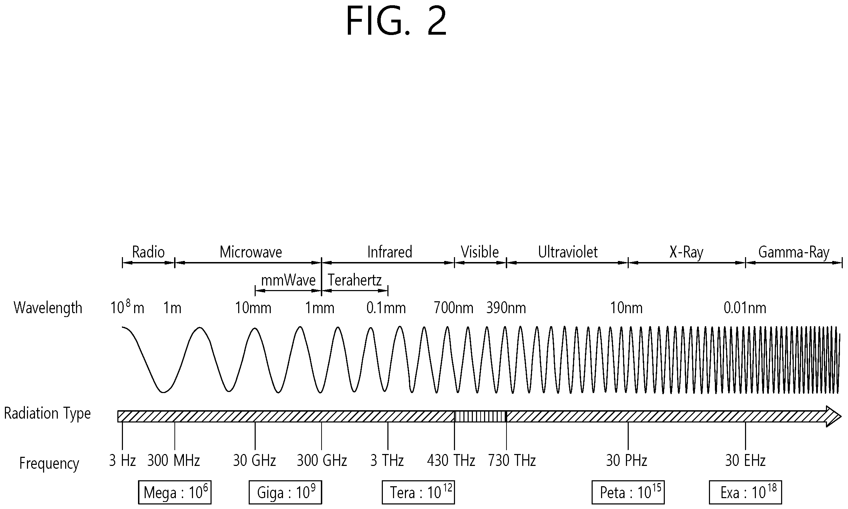

Core implementation technology of 6G system is described below.
- Artificial Intelligence (AI): Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical backhaul network (FSO Backhaul Network)
- Non-terrestrial networks (NTN)
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An unmanned aerial vehicle (UAV) or drone will be an important factor in 6G wireless communication. In most cases, a high-speed data wireless connection is provided using UAV technology. A base station entity is installed in the UAV to provide cellular connectivity. UAVs have certain features, which are not found in fixed base station infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Autonomous driving (self-driving): For perfect autonomous driving, it is necessary to notify dangerous situation of each other through communication between vehicle and vehicle, to check information like parking information location and signal change time through communication between vehicle and infrastructure such as parking lots and/or traffic lights. Vehicle to everything (V2X) that is a core element for establishing an autonomous driving infrastructure is a technology that vehicle communicates and shares with various elements in road for autonomous driving such as vehicle to vehicle (V2V), vehicle to infrastructure (V2I). To maximize a performance of autonomous driving and to secure high safety, high transmission speed and low latency technology have to be needed. Furthermore, to directly control vehicle in dangerous situation and to actively intervene vehicle driving beyond a level of a warning or a guidance message to driver, as the amount of the information to transmit and receive is larger, autonomous driving is expected to be maximized in 6G being higher transmission speed and lower latency than 5G.

For clarity in the description, 5G NR is mainly described, but the technical idea according to an embodiment of the present disclosure is not limited thereto. Various embodiments of the present disclosure can also be applied to 6G communication systems.

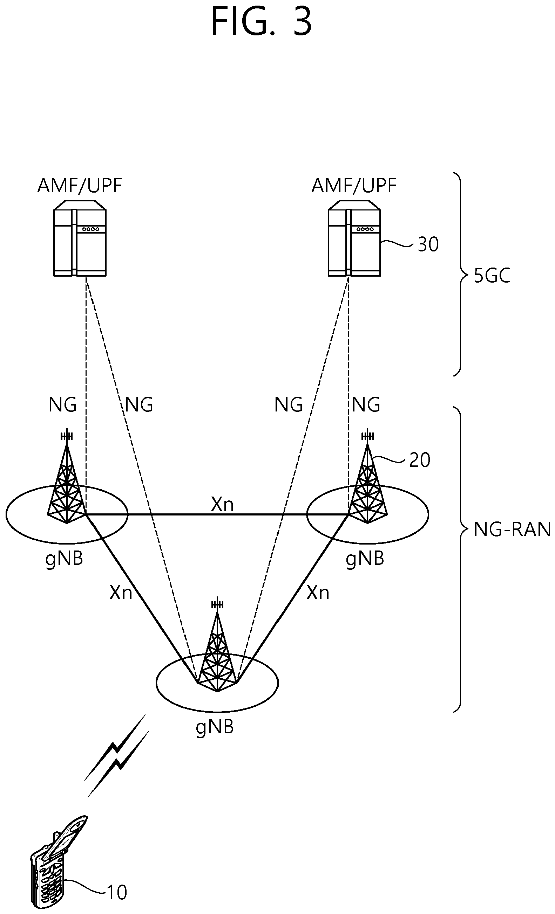

FIG. 3 shows a structure of an NR system, based on an embodiment of the present disclosure. The embodiment of FIG. 3 may be combined with various embodiments of the present disclosure.

Referring to FIG. 3, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 3 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

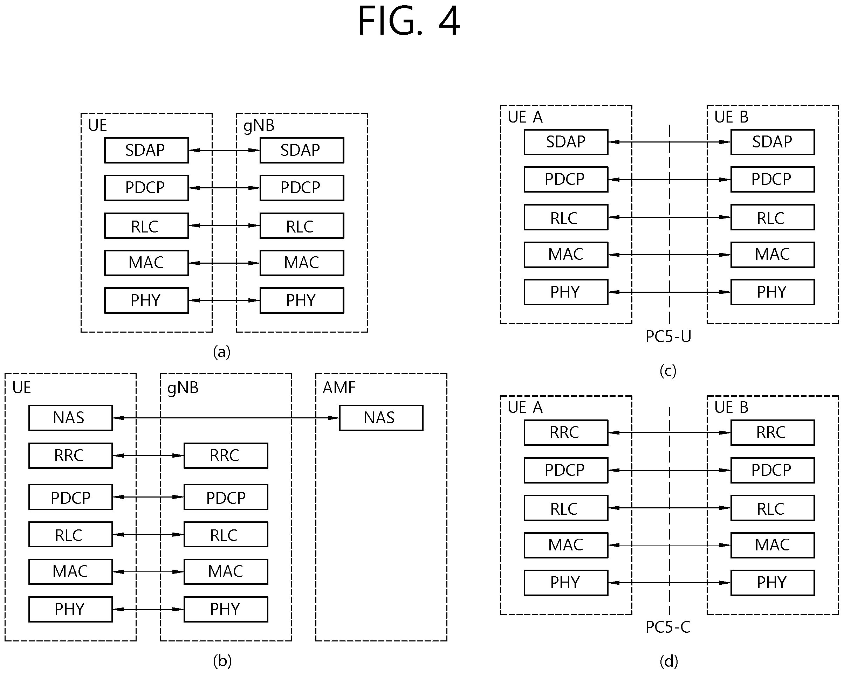

FIG. 4 shows a radio protocol architecture, based on an embodiment of the present disclosure. The embodiment of FIG. 4 may be combined with various embodiments of the present disclosure. Specifically, (a) of FIG. 4 shows a radio protocol stack of a user plane for Uu communication, and (b) of FIG. 4 shows a radio protocol stack of a control plane for Uu communication. (c) of FIG. 4 shows a radio protocol stack of a user plane for SL communication, and (d) of FIG. 4 shows a radio protocol stack of a control plane for SL communication.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

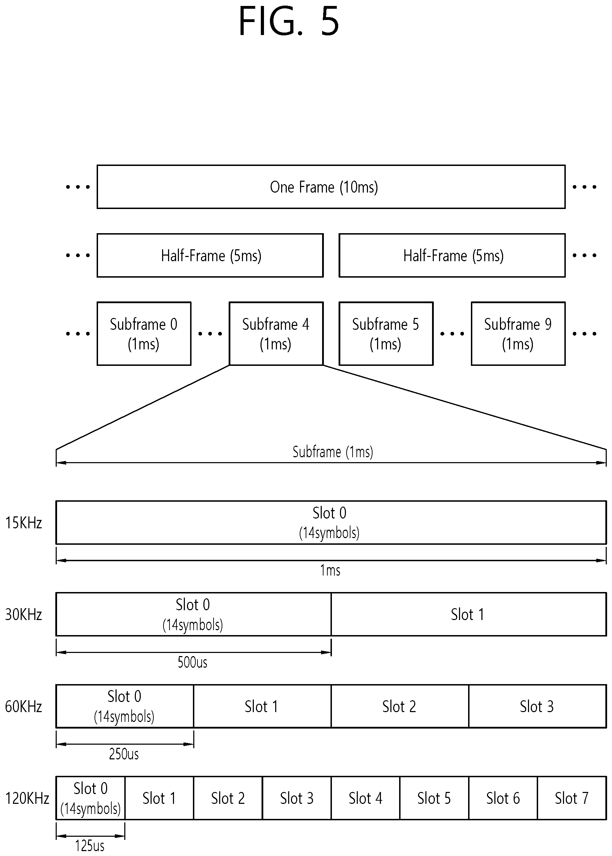

FIG. 5 shows a structure of a radio frame of an NR, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

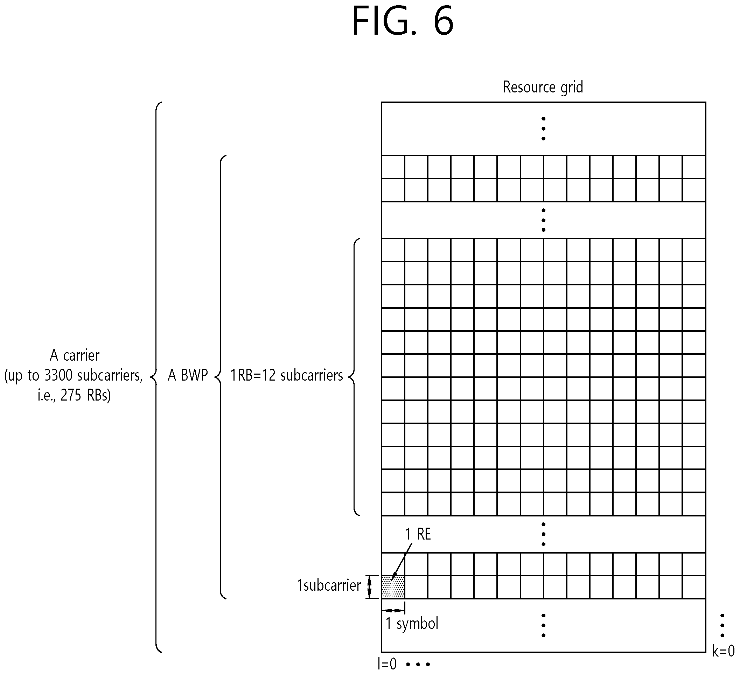

FIG. 6 shows a structure of a slot of an NR frame, based on an embodiment of the present disclosure. The embodiment of FIG. 6 may be combined with various embodiments of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

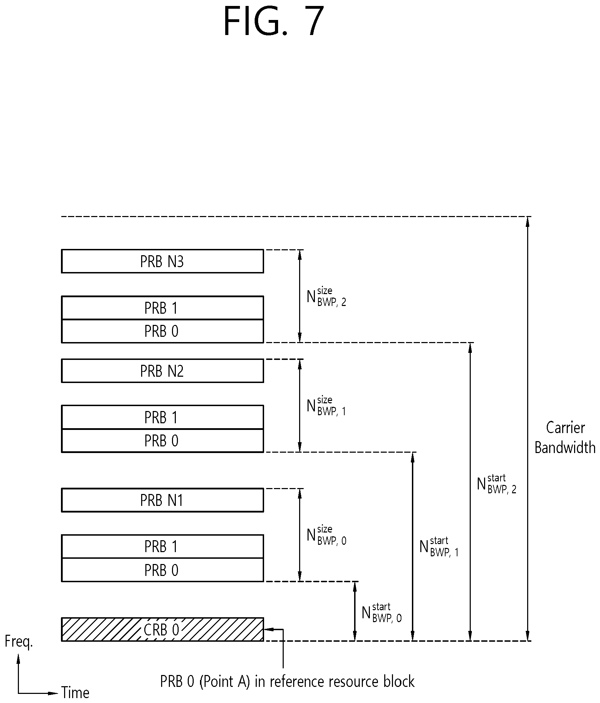

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

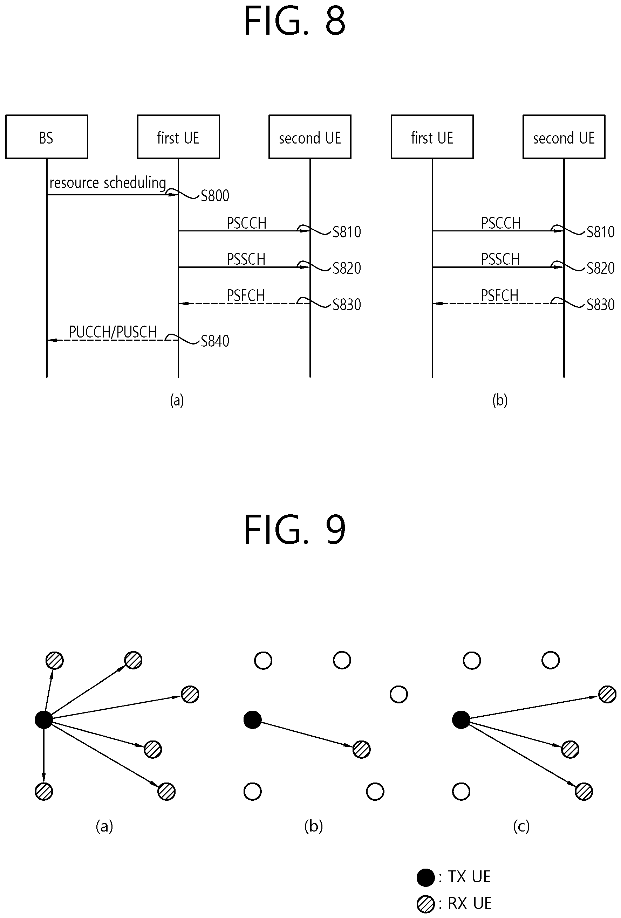

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:
- Resource pool index - ceiling (log₂ I) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling (log₂(N^{SL}_{subChannel})) bits
- SCI format 1-A fields: frequency resource assignment, time resource assignment
- PSFCH-to-HARQ feedback timing indicator - ceiling (log₂ N_{fb_timing}) bits, where N_{fb_timing} is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 8, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format. For example, the 1^{st}-stage SCI format may include a SCI format 1-A, and the 2^{nd}-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log2(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

**[Table 5]**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

**[Table 6]**

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

**[Table 7]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

FIG. 9 shows three cast types, based on an embodiment of the present disclosure. The embodiment of FIG. 9 may be combined with various embodiments of the present disclosure. Specifically, (a) of FIG. 9 shows broadcast-type SL communication, (b) of FIG. 9 shows unicast type-SL communication, and (c) of FIG. 9 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a hybrid automatic repeat request (HARQ) procedure will be described.

For example, the SL HARQ feedback may be enabled for unicast. In this case, in a non-code block group (non-CBG) operation, if the receiving UE decodes a PSCCH of which a target is the receiving UE and if the receiving UE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.

For example, the SL HARQ feedback may be enabled for groupcast. For example, in the non-CBG operation, two HARQ feedback options may be supported for groupcast.
(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting UE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.
(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, UEs belonging to the same group may transmit HARQ feedback by using different PSFCH resources.

In the present disclosure, HARQ-ACK may be referred to as ACK, ACK information, or positive-ACK information, and HARQ-NACK may be referred to as NACK, NACK information, or negative-ACK information.

Hereinafter, UE procedure for reporting HARQ-ACK on sidelink will be described.

A UE can be indicated by an SCI format scheduling a PSSCH reception, in one or more sub-channels from a number of N^{PSSCH}_{subch} sub-channels, to transmit a PSFCH with HARQ-ACK information in response to the PSSCH reception. The UE provides HARQ-ACK information that includes ACK or NACK, or only NACK.

A UE can be provided, by sl-PSFCH-Period-r16, a number of slots in a resource pool for a period of PSFCH transmission occasion resources. If the number is zero, PSFCH transmissions from the UE in the resource pool are disabled. A UE expects that a slot t'ₖ^{SL} (0 ≤ k < T'ₘₐₓ) has a PSFCH transmission occasion resource if k mod N^{PSFCH} _{PSSCH} = 0, where t'ₖ^{SL} is a slot that belongs to the resource pool, T'ₘₐₓ is a number of slots that belong to the resource pool within 10240 msec, and N^{PSFCH}_{PSSCH} is provided by sl-PSFCH-Period-r16. A UE may be indicated by higher layers to not transmit a PSFCH in response to a PSSCH reception.If a UE receives a PSSCH in a resource pool and the HARQ feedback enabled/disabled indicator field in an associated SCI format 2-A or a SCI format 2-B has value 1, the UE provides the HARQ-ACK information in a PSFCH transmission in the resource pool. The UE transmits the PSFCH in a first slot that includes PSFCH resources and is at least a number of slots, provided by sl-MinTimeGapPSFCH-r16, of the resource pool after a last slot of the PSSCH reception.

A UE is provided by sl-PSFCH-RB-Set-r16 a set of M^{PSFCH}_{PRB,set} PRBs in a resource pool for PSFCH transmission in a PRB of the resource pool. For a number of N_{subch} sub-channels for the resource pool, provided by sl-NumSubchannel, and a number of PSSCH slots associated with a PSFCH slot that is less than or equal to N^{PSFCH}_{PSSCH}, the UE allocates the [(i+j·N^{PSFCH}_{PSSCH})·M^{PSFCH}_{subch,slot}, (i+1+j·N^{PSFCH}_{PSSCH})·M^{PSFCH}_{subch,slot}-1] PRBs from the M_{PRB,set}^{PSFCH} PRBs to slot i among the PSSCH slots associated with the PSFCH slot and sub-channel j, where M^{PSFCH}_{subch,slot} = M^{PSFCH}_{PRB,set}/(N_{subch}·N^{PSFCH}_{PSSCH}), 0 ≤ i < N^{PSFCH}_{PSSCH}, 0 ≤ j < N_{subch}, and the allocation starts in an ascending order of i and continues in an ascending order of j. The UE expects that M^{PSFCH}_{PRB,set} is a multiple of N_{subch}·N^{PSFCH}_{PSSCH}.

A UE determines a number of PSFCH resources available for multiplexing HARQ-ACK information in a PSFCH transmission as R^{PSFCH}_{PRB,CS} = N^{PSFCH}_{type}·M^{PSFCH}_{subch,slot}·N^{PSFCH}_{CS} where N^{PSFCH}_{CS} is a number of cyclic shift pairs for the resource pool and, based on an indication by higher layers,
- N^{PSFCH}_{type} = 1 and the M^{PSFCH}_{subch,slot} PRBs are associated with the starting sub-channel of the corresponding PSSCH
- N^{PSFCH}_{type} = N^{PSSCH}_{subch} and the N^{PSSCH}_{subch}·M^{PSFCH}_{subch,slot} PRBs are associated with one or more sub-channels from the N^{PSSCH}_{subch} sub-channels of the corresponding PSSCH

The PSFCH resources are first indexed according to an ascending order of the PRB index, from the N^{PSFCH}_{type}·M^{PSFCH}_{subch,slot} PRBs, and then according to an ascending order of the cyclic shift pair index from the N^{PSFCH}_{CS} cyclic shift pairs.

A UE determines an index of a PSFCH resource for a PSFCH transmission in response to a PSSCH reception as (P_{ID} + M_{ID}) mod R^{PSFCH}_{PRB,CS} where P_{ID} is a physical layer source ID provided by SCI format 2-A or 2-B scheduling the PSSCH reception, and M_{ID} is the identity of the UE receiving the PSSCH as indicated by higher layers if the UE detects a SCI format 2-A with Cast type indicator field value of "01"; otherwise, M_{ID} is zero.

A UE determines a m₀ value, for computing a value of cyclic shift α, from a cyclic shift pair index corresponding to a PSFCH resource index and from N^{PSFCH}_{CS} using Table 8.

**[Table 8]**

| N^{PSFCH}_{CS} | m₀ | | | | | |
|---|---|---|---|---|---|---|
| | cyclic shift pair index 0 | cyclic shift pair index 1 | cyclic shift pair index 2 | cyclic shift pair index 3 | cyclic shift pair index 4 | cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

A UE determines a m_{cs} value, for computing a value of cyclic shift α, as in Table 9 if the UE detects a SCI format 2-A with Cast type indicator field value of "01" or "10", or as in Table 10 if the UE detects a SCI format 2-B or a SCI format 2-A with Cast type indicator field value of "11". The UE applies one cyclic shift from a cyclic shift pair to a sequence used for the PSFCH transmission.

**[Table 9]**

| HARQ-ACK Value | 0 (NACK) | 1 (ACK) |
|---|---|---|
| Sequence cyclic shift | 0 | 6 |

**[Table 10]**

| HARQ-ACK Value | 0 (NACK) | 1 (ACK) |
|---|---|---|
| Sequence cyclic shift | 0 | N/A |

Meanwhile, a set of (equally spaced) non-contiguous RBs on a frequency may be allocated to a UE. This set of non-contiguous RBs may be referred to as interlaced RBs. This may be useful in spectrum (e.g., shared spectrum) that is subject to regulations such as occupied channel bandwidth (OCB), power spectral density (PSD), etc.

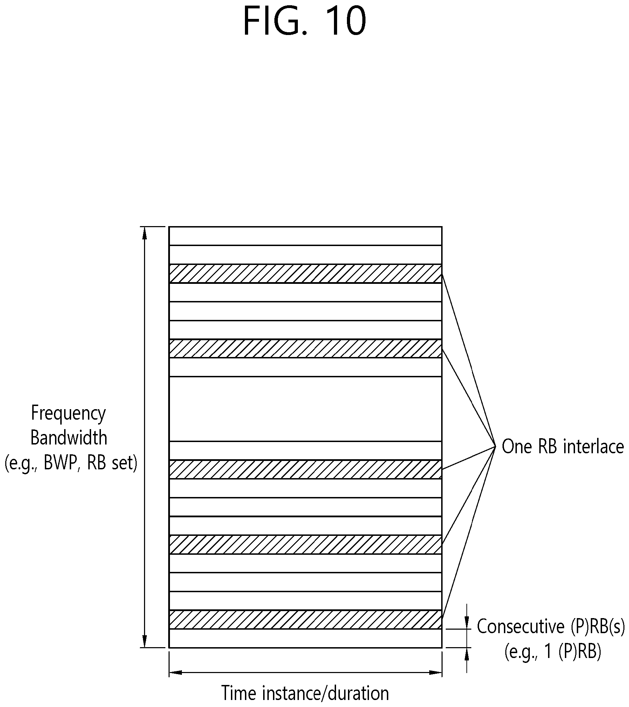

FIG. 10 shows an interlaced RB, based on an embodiment of the present disclosure. The embodiment of FIG. 10 may be combined with various embodiments of the present disclosure.

Referring to FIG. 10, interlaces of RBs may be defined in a frequency domain. An interlace m ∈ {0, 1, ..., M-1} may comprise (common) RBs {m, M+m, 2M+m, 3M+m, ...}, where M may represent the number of interlaced RBs given by Table 11.

**[Table 11]**

| u | M |
|---|---|
| 0 | 10 |
| 1 | 5 |

A communication device (e.g., a device, a UE, a vehicle, a drone, etc. proposed in various embodiments of the present disclosure) may transmit a signal/channel by using one or more interlaced RBs.

Meanwhile, in the next-generation system, the UE may perform a sidelink transmission operation and/or a sidelink reception operation in an unlicensed band. Meanwhile, for the operation in the unlicensed band, a channel sensing operation (e.g., energy detection/measurement) for a channel to be used may be performed before the UE performs transmission, depending on band-specific regulations or requirements. Only if the channel or the set of RBs to be used is determined to be IDLE as a result of the channel sensing (e.g., if the measured energy is less than or equal to a specific threshold), the UE may perform transmission in the unlicensed band. If the channel or the RB set to be used is determined to be BUSY as a result of the channel sensing (e.g., if the measured energy is greater than or equal to a specific threshold), the UE may cancel all or part of transmission in the unlicensed band. Meanwhile, in the operation in the unlicensed band, the UE may skip or simplify the channel sensing operation (make a channel sensing interval relatively small) within a certain time after transmission within a specific time duration. On the other hand, after the certain time has passed after the transmission, the UE may determine whether to transmit after performing the usual channel sensing operation. Meanwhile, for transmission in the unlicensed band, power spectral density (PSD) and/or a size of frequency occupation domain and/or a time interval of a signal/channel transmitted by the UE may be greater than or equal to a certain level, respectively, depending on regulations or requirements. Meanwhile, in the unlicensed band, in order to simplify channel sensing, it may be informed through channel occupancy time (COT) duration information that a channel obtained based on initial general channel sensing is occupied for a certain time, and the maximum length of the COT duration may be configured differently depending on a priority value of a data packet or a service.

Meanwhile, a base station may share a COT duration obtained by the base station based on channel sensing through DCI transmission, and the UE may perform a specific (indicated) channel sensing type and/or CP extension within the COT duration based on DCI information received from the base station. Meanwhile, a UE may share a COT duration obtained by the UE based on channel sensing with a base station that is a destination of UL transmission of the UE, and the related information may be provided through UL through configured grant-uplink control information (CG-UCI). In the above situation, the base station may perform simplified channel sensing within the COT duration shared by the UE. In the case of sidelink communication, there is a situation in which a UE receives, from a base station, information on resources to be used for sidelink transmission through DCI or RRC signaling, such as the mode 1 resource allocation (RA) operation, and there is a situation in which a UE performs sidelink transmission and reception through an inter-UE sensing operation without the assistance of the base station, such as the mode 2 RA operation.

Meanwhile, in the case of the channel access type 1, which may be used regardless of the channel occupancy time (COT) configuration, DL transmission may be performed based on the procedure shown in Table 12 to Table 13.

**[Table 12]**

| | |
|---|---|
| The eNB/gNB may transmit a transmission after first sensing the channel to be idle during the sensing slot durations of a defer duration *T_{d}* and after the counter *N* is zero in step 4. The counter *N* is adjusted by sensing the channel for additional sensing slot duration(s) according to the steps below: | |
| | 1) set *N = Nᵢₙᵢₜ,* where *Nᵢₙᵢₜ* is a random number uniformly distributed between 0 and *CWₚ,* and go to step 4; |
| | 2) if *N >* 0 and the eNB/gNB chooses to decrement the counter, set *N = N -* 1; |
| | 3) sense the channel for an additional sensing slot duration, and if the additional sensing slot duration is idle, go to step 4; else, go to step 5; |
| | 4) if *N* = 0, stop; else, go to step 2. |
| | 5) sense the channel until either a busy sensing slot is detected within an additional defer duration *T_{d}* or all the sensing slots of the additional defer duration *T_{d}* are detected to be idle; |
| | 6) if the channel is sensed to be idle during all the sensing slot durations of the additional defer duration *T_{d},* go to step 4; else, go to step 5; |
| If an eNB/gNB has not transmitted a transmission after step 4 in the procedure above, the eNB/gNB may transmit a transmission on the channel, if the channel is sensed to be idle at least in a sensing slot duration *Tₛₗ* when the eNB/gNB is ready to transmit and if the channel has been sensed to be idle during all the sensing slot durations of a defer duration *T_{d}* immediately before this transmission. If the channel has not been sensed to be idle in a sensing slot duration *Tₛₗ* when the eNB/gNB first senses the channel after it is ready to transmit or if the channel has been sensed to be not idle during any of the sensing slot durations of a defer duration *T_{d}* immediately before this intended transmission, the eNB/gNB proceeds to step 1 after sensing the channel to be idle during the sensing slot durations of a defer duration *T_{d}.* | |
| The defer duration *T_{d}* consists of duration *T_{f}* = 16*us* immediately followed by *mₚ* consecutive sensing slot durations *Tₛₗ,* and *T_{f}* includes an idle sensing slot duration *Tₛₗ* at start of *T_{f}.* | |

**[Table 13]**

| | | |
|---|---|---|
| If a gNB transmits transmissions including PDSCH that are associated with channel access priority class p on a channel, the gNB maintains the contention window value *CWₚ* and adjusts *CWₚ* before step 1 of the procedure described in clause 4.1.1 for those transmissions using the following steps: | | |
| | 1) For every priority class *p* ∈ {1,2,3,4}, set *CWₚ = CW_{min,p}.* | |
| | 2) If HARQ-ACK feedback is available after the last update of *Wₚ*, go to step 3. Otherwise, if the gNB transmission after procedure described in clause 4.1.1 does not include a retransmission or is transmitted within a duration *T_{W}* from the end of the *reference duration* corresponding to the earliest DL channel occupancy after the last update of *CWₚ*, go to step 5; otherwise go to step 4. | |
| | 3) The HARQ-ACK feedback(s) corresponding to PDSCH(s) in the reference duration for the latest DL channel occupancy for which HARQ-ACK feedback is available is used as follows: | |
| | | a. If at least one HARQ-ACK feedback is 'ACK' for PDSCH(s) with transport block based feedback or at least 10% of HARQ-ACK feedbacks is 'ACK' for PDSCH CBGs transmitted at least partially on the channel with code block group based feedback, go to step 1; otherwise go to step 4. |
| | 4) Increase *CWₚ* for every priority class *p* ∈ {1,2,3,4} to the next higher allowed value. | |
| | 5) For every priority class p ∈ {1,2,3,4}, maintain CWₚ as it is; go to step 2. | |
| The *reference duration* and duration *T_{w}* in the procedure above are defined as follows: | | |
| | - The *reference duration* corresponding to a channel occupancy initiated by the gNB including transmission of PDSCH(s) is defined in this clause as a duration starting from the beginning of the channel occupancy until the end of the first slot where at least one unicast PDSCH is transmitted over all the resources allocated for the PDSCH, or until the end of the first transmission burst by the gNB that contains unicast PDSCH(s) transmitted over all the resources allocated for the PDSCH, whichever occurs earlier. If the channel occupancy includes a unicast PDSCH, but it does not include any unicast PDSCH transmitted over all the resources allocated for that PDSCH, then, the duration of the first transmission burst by the gNB within the channel occupancy that contains unicast PDSCH(s) is the *reference duration* for CWS adjustment. | |
| | - *T_{W}* = max (*T_{A}*, *T_{B}* + 1*ms*) where *T_{B}* is the duration of the transmission burst from start of the *reference duration* in ms and *T_{A} =* 5*ms* if the absence of any other technology sharing the channel can not be guaranteed on a long-term basis (e.g. by level of regulation), and *T_{A} =* 10*ms* otherwise. | |
| If a gNB transmits transmissions using Type 1 channel access procedures associated with the channel access priority class p on a channel and the transmissions are not associated with explicit HARQ-ACK feedbacks by the corresponding UE(s), the gNB adjusts *CWₚ* before step 1 in the procedures described in subclase 4.1.1, using the latest *CWₚ* used for any DL transmissions on the channel using Type 1 channel access procedures associated with the channel access priority class p. If the corresponding channel access priority class p has not been used for any DL transmissions on the channel, *CWₚ = CW_{min,p}* is used. | | |

Meanwhile, for the channel access type 1, which may be used regardless of the channel occupancy time (COT) configuration, UL transmission may be performed based on the procedure shown in Table 14 to Table 15.

**[Table 14]**

| | |
|---|---|
| A UE may transmit the transmission using Type 1 channel access procedure after first sensing the channel to be idle during the slot durations of a defer duration *T_{d},* and after the counter *N* is zero in step 4. The counter *N* is adjusted by sensing the channel for additional slot duration(s) according to the steps described below. | |
| | 1) set *N = Nᵢₙᵢₜ*, where *Nᵢₙᵢₜ* is a random number uniformly distributed between 0 and *CWₚ,* and go to step 4; |
| | 2) if *N >* 0 and the UE chooses to decrement the counter, set *N = N -* 1; |
| | 3) sense the channel for an additional slot duration, and if the additional slot duration is idle, go to step 4; else, go to step 5; |
| | 4) if *N* = 0, stop; else, go to step 2. |
| | 5) sense the channel until either a busy slot is detected within an additional defer duration *T_{d}* or all the slots of the additional defer duration *T_{d}* are detected to be idle; |
| | 6) if the channel is sensed to be idle during all the slot durations of the additional defer duration *T_{d},* go to step 4; else, go to step 5; |
| If a UE has not transmitted a UL transmission on a channel on which UL transmission(s) are performed after step 4 in the procedure above, the UE may transmit a transmission on the channel, if the channel is sensed to be idle at least in a sensing slot duration *Tₛₗ* when the UE is ready to transmit the transmission and if the channel has been sensed to be idle during all the slot durations of a defer duration *T_{d}* immediately before the transmission. If the channel has not been sensed to be idle in a sensing slot duration *Tₛₗ* when the UE first senses the channel after it is ready to transmit, or if the channel has not been sensed to be idle during any of the sensing slot durations of a defer duration *T_{d}* immediately before the intended transmission, the UE proceeds to step 1 after sensing the channel to be idle during the slot durations of a defer duration *T_{d}*. | |
| The defer duration *T_{d}* consists of duration *T_{f} =* 16*us* immediately followed by *mₚ* consecutive slot durations where each slot duration is *Tₛₗ = 9us,* and *T_{f}* includes an idle slot duration *Tₛₗ* at start of *T_{f}.* | |

**[Table 15]**

| | | |
|---|---|---|
| If a UE transmits transmissions using Type 1 channel access procedures that are associated with channel access priority class p on a channel, the UE maintains the contention window value *CWₚ* and adjusts *CWₚ* for those transmissions before step 1 of the procedure described in clause 4.2.1.1, using the following steps: | | |
| | 1) For every priority class *p* ∈ {1,2,3,4}, set *CWₚ = CW_{min,p}*; | |
| | 2) If HARQ-ACK feedback is available after the last update of *CWₚ*, go to step 3. Otherwise, if the UE transmission after procedure described in clause 4.2.1.1 does not include a retransmission or is transmitted within a duration *T_{w}* from the end of the *reference duration* corresponding to the earliest UL channel occupancy after the last update of *CWₚ,* go to step 5; otherwise go to step 4. | |
| | 3) The HARQ-ACK feedback(s) corresponding to PUSCH(s) in the *reference duration* for the latest UL channel occupancy for which HARQ-ACK feedback is available is used as follows: | |
| | | a. If at least one HARQ-ACK feedback is 'ACK' for PUSCH(s) with transport block (TB) based feedback or at least 10% of HARQ-ACK feedbacks are 'ACK' for PUSCH CBGs transmitted at least partially on the channel with code block group (CBG) based feedback, go to step 1; otherwise go to step 4. |
| | 4) Increase *CWₚ* for every priority class *p* ∈ {1,2,3,4} to the next higher allowed value; | |
| | 5) For every priority class *p* ∈ {1,2,3,4}, maintain *CWₚ* as it is; go to step 2. | |
| The HARQ-ACK feedback, *reference duration* and duration *T_{w}* in the procedure above are defined as the following: | | |
| | - For the purpose of contention window adjustment in this clause, HARQ-ACK feedback for PUSCH(s) transmissions are expected to be provided to UE(s) explicitly or implicitly where explicit HARQ-ACK is determined based on the valid HARQ-ACK feedback in a corresponding CG-DFI as described in clause 10.5 in [7], and implicit HARQ-ACK feedback is determined based on the indication for a new transmission or retransmission in the DCI scheduling PUSCH(s) as follows: | |
| | | - If a new transmission is indicated, 'ACK' is assumed for the transport blocks or code block groups in the corresponding PUSCH(s) for the TB-based and CBG-based transmission, respectively. |
| | | - If a retransmission is indicated for TB-based transmissions, 'NACK' is assumed for the transport blocks in the corresponding PUSCH(s). |
| | | - If a retransmission is indicated for CBG-based transmissions, if a bit value in the code block group transmission information (CBGTI) field is '0' or '1' as described in clause 5.1.7.2 in [8], 'ACK' or 'NACK' is assumed for the corresponding CBG in the corresponding PUSCH(s), respectively. |
| | - The *reference duration* corresponding to a channel occupancy initiated by the UE including transmission of PUSCH(s) is defined in this clause as a duration starting from the beginning of the channel occupancy until the end of the first slot where at least one PUSCH is transmitted over all the resources allocated for the PUSCH, or until the end of the first transmission burst by the UE that contains PUSCH(s) transmitted over all the resources allocated for the PUSCH, whichever occurs earlier. If the channel occupancy includes a PUSCH, but it does not include any PUSCH transmitted over all the resources allocated for that PUSCH, then, the duration of the first transmission burst by the UE within the channel occupancy that contains PUSCH(s) is the *reference duration* for CWS adjustment. | |
| | - *T_{w}* = max (*T_{A}*, *T_{B} +* 1*ms*) where *T_{B}* is the duration of the transmission burst from start of the *reference duration* in ms and *T_{A} =* 5*ms* if the absence of any other technology sharing the channel cannot be guaranteed on a long-term basis (e.g. by level of regulation), and *T_{A}* = *10ms* otherwise. | |

Meanwhile, the channel access type 2, which is a simplified channel access type, may be used within a channel occupancy time (COT) before transmission, and DL transmission may be performed based on the procedure shown in Table 16.

**[Table 16]**

| | |
|---|---|
| 4.1.2 Type 2 DL channel access procedures | |
| This clause describes channel access procedures to be performed by an eNB/gNB where the time duration spanned by sensing slots that are sensed to be idle before a downlink transmission(s) is deterministic. | |
| If an eNB performs Type 2 DL channel access procedures, it follows the procedures described in clause 4.1.2.1. | |
| Type 2A channel access procedures as described in clause 4.1.2.1 are only applicable to the following transmission(s) performed by an eNB/gNB: | |
| | - Transmission(s) initiated by an eNB including discovery burst and not including PDSCH where the transmission(s) duration is at most 1*ms,* or |
| | - Transmission(s) initiated by a gNB with only discovery burst or with discovery burst multiplexed with non-unicast information, where the transmission(s) duration is at most 1*ms,* and the discovery burst duty cycle is at most 1/20, or |
| | - Transmission(s) by an eNB/ gNB following transmission(s) by a UE after a gap of 25*us* in a shared channel occupancy as described in clause 4.1.3. |
| Type 2B or Type 2C DL channel access procedures as described in clause 4.1.2.2 and 4.1.2.3, respectively, are applicable to the transmission(s) performed by a gNB following transmission(s) by a UE after a gap of 16*us* or up to 16*us*, respectively, in a shared channel occupancy as described in clause 4.1.3. | |
| 4.1.2.1 Type 2A DL channel access procedures | |
| An eNB/gNB may transmit a DL transmission immediately after sensing the channel to be idle for at least a sensing interval *T_{short_dl}* = 25*us. T_{short_dl}* consists of a duration *T_{f}* = 16*us* immediately followed by one sensing slot and *T_{f}* includes a sensing slot at start of *T_{f}.* The channel is considered to be idle for *T_{short_dl}* if both sensing slots of *T_{short_dl}* are sensed to be idle. | |
| 4.1.2.2 Type 2B DL channel access procedures | |
| A gNB may transmit a DL transmission immediately after sensing the channel to be idle within a duration of *T_{f} =* 16*us. T_{f}* includes a sensing slot that occurs within the last 9*us* of *T_{f}.* The channel is considered to be idle within the duration *T_{f}* if the channel is sensed to be idle for a total of at least 5*us* with at least 4*us* of sensing occurring in the sensing slot. | |
| 4.1.2.3 Type 2C DL channel access procedures | |
| When a gNB follows the procedures in this clause for transmission of a DL transmission, the gNB does not sense the channel before transmission of the DL transmission. The duration of the corresponding DL transmission is at most 584*us.* | |

Meanwhile, the channel access type 2, which is a simplified channel access type, may be used within a channel occupancy time (COT) before transmission, and UL transmission may be performed based on the procedure shown in Table 17.

**[Table 17]**

| |
|---|
| 4.2.1.2 Type 2 UL channel access procedure |
| This clause describes channel access procedures by UE where the time duration spanned by the sensing slots that are sensed to be idle before a UL transmission(s) is deterministic. If a UE is indicated by an eNB to perform Type 2 UL channel access procedures, the UE follows the procedures described in clause 4.2.1.2.1. |
| 4.2.1.2.1 Type 2A UL channel access procedure |
| If a UE is indicated to perform Type 2A UL channel access procedures, the UE uses Type 2A UL channel access procedures for a UL transmission. The UE may transmit the transmission immediately after sensing the channel to be idle for at least a sensing interval *T*_{short_ul} = 25*us. T*_{short_ul} consists of a duration *T_{f}* = 16*us* immediately followed by one sensing slot and *T_{f}* includes a sensing slot at start of *T_{f}.* The channel is considered to be idle for *T*_{short_ul} if both sensing slots of *T*_{short_ul}.are sensed to be idle. |
| 4.2.1.2.2Type 2B UL channel access procedure |
| If a UE is indicated to perform Type 2B UL channel access procedures, the UE uses Type 2B UL channel access procedure for a UL transmission. The UE may transmit the transmission immediately after sensing the channel to be idle within a duration of *T_{f} =* 16*us. T_{f}* includes a sensing slot that occurs within the last 9*us* of *T_{f}.* The channel is considered to be idle within the duration *T_{f}* if the channel is sensed to be idle for total of at least 5*us* with at least 4*us* of sensing occurring in the sensing slot. |
| 4.2.1.2.3 Type 2C UL channel access procedure |
| If a UE is indicated to perform Type 2C UL channel access procedures for a UL transmission, the UE does not sense the channel before the transmission. The duration of the corresponding UL transmission is at most 584*us.* |

In an embodiment of the present disclosure, a TYPE 2A SL channel access may be in the same manner as the TYPE 2A DL and/or UL channel access. For example, the TYPE 2A SL channel access may be performed in a sensing interval T_short_sl=25us, where the interval may consist of a duration T_f=16us immediately followed by one sensing slot and T_f may include a sensing slot at start of T_f. The basic IDLE determination in the TYPE 2A SL channel access may also borrow IDLE determination from the DL or UL channel access.

In an embodiment of the present disclosure, a TYPE 2B SL channel access may be in the same manner as the TYPE 2B DL and/or UL channel access. For example, in the case of the TYPE 2B SL channel access, the UE may perform transmission immediately after sensing a channel to be idle within a duration of T_f=16us. T_f may include a sensing slot that occurs within the last 9us of T_f. The basic IDLE determination in the TYPE 2B SL channel access may also borrow IDLE determination from the DL or UL channel access.

In an embodiment of the present disclosure, a TYPE 2C SL channel access may be in the same manner as the TYPE 2C DL and/or UL channel access. For example, in the case of the TYPE 2C SL channel access, the UE may not perform channel sensing. Instead, the time duration of SL transmission may be at most 584us.

In an embodiment of the present disclosure, a TYPE 1 SL channel access may be in the same manner as the TYPE 1 DL and/or UL channel access. For example, the UE may randomly derive an integer value N based on a contention window size corresponding to a priority class. Then, if a channel sensing result for a defer duration T_d corresponding to the priority class is idle, the UE may decrease the N-1 counter value in units of T_sl when IDLE. If the value of the counter is zero, the UE may occupy the RB set or the channel subject to channel sensing. If a part of a channel sensing result for the T_sl duration is determined to be busy, the UE may keep the counter value until a channel sensing result for the defer duration T_d is idle, and the UE may continue to perform channel sensing. In the above, the defer duration T_d may consist of T_f=16us and contiguous m_p * T_sl after T_f=16us, where m_p may be a value determined by the priority class (p), and T_sl=9us may be a time interval in which channel sensing is performed.

Hereinafter, a channel access priority class (CAPC) is described.

The CAPCs of MAC CEs and radio bearers may be fixed or configured to operate in FR1:
- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 18 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

**[Table 18]**

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | |
| NOTE: A lower CAPC value indicates a higher priority. | |

Table 19 shows that mₚ, a minimum contention window (CW), a maximum CW, a maximum channel occupancy time (MCOT), and an allowed CW size vary depending on channel access priority classes, in DL.

**[Table 19]**

| Channel Access Priority Class (p) | mₚ | CW_{min,p} | CW_{max,p} | T_{mcot,p} | allowed CWₚ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 19, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

Table 20 shows that mₚ, a minimum contention window (CW), a maximum CW, a maximum channel occupancy time (MCOT), and an allowed CW size vary depending on channel access priority classes, in UL.

**[Table 20]**

| Channel Access Priority Class (p) | mₚ | CW_{min,p} | CW_{max,p} | T_{ulmcot,p} | allowed CWₚ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 20, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

In an embodiment of the present disclosure, the UE may not be ready to transmit sidelink transmission while the UE has occupied a channel through the TYPE 1 SL channel access. In this case, the UE may configure a defer duration of length T_d and a sensing duration of length T_sl immediately before the sidelink transmission that it is ready to transmit. Herein, if both are idle, the UE may immediately perform the sidelink transmission, but if at least one of the defer duration and the sensing duration is busy, the UE may again perform the TYPE 1 SL channel access. For example, if the sidelink transmission is not possible at a time when channel sensing ends (e.g., if the end of the channel sensing is after the start of the sidelink transmission), the UE may reselect sidelink transmission resource(s). For example, the reselected resource may be selected by considering the end time of the channel sensing and/or the length of the remaining sensing interval, etc. For example, the remaining sensing interval may be a value derived from assuming that all channel sensing is IDLE.

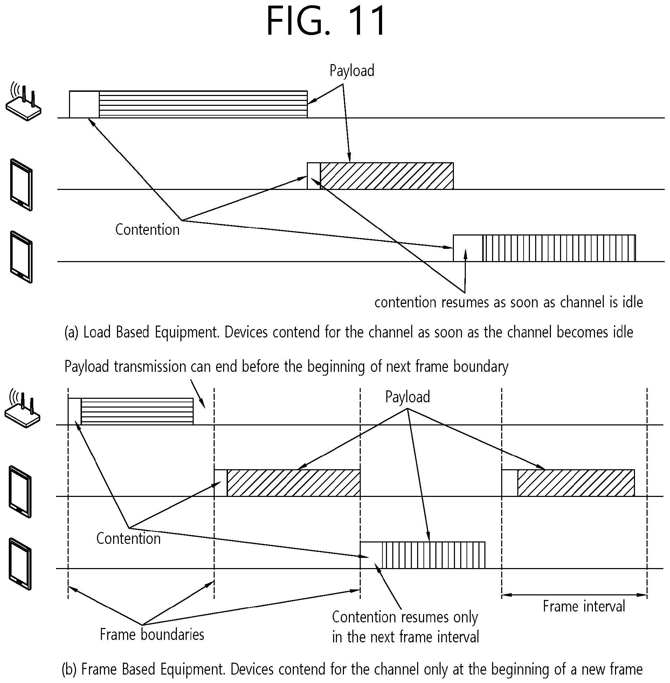

FIG. 11 shows a channel access procedure, based on an embodiment of the present disclosure. Specifically, (a) of FIG. 11 shows an example of a dynamic channel access procedure (load based equipment, LBE), and (b) of FIG. 11 shows an example of a semi-static channel access procedure (frame based equipment, FBE). The embodiment of FIG. 11 may be combined with various embodiments of the present disclosure.

Referring to (a) of FIG. 11, if a channel is idle, the UE may perform contention with other UEs on an unlicensed band to immediately occupy the channel. In addition, if the UE occupies the channel, the UE may transmit data.

Referring to (b) of FIG. 11, the UE may perform contention with other UEs on an unlicensed band at the last time within a synchronized frame boundary (or a fixed frame period (FFP)) (e.g., certain time before the start of the next FFP (or starting time)). In addition, if the UE occupies a channel within a fixed frame period (FFP), the UE may transmit data. The data transmission should complete before the next FFP begins.

Meanwhile, SL-UE related objectives may be as follows.

Study and specify support of sidelink on unlicensed spectrum for both mode 1 and mode 2 where Uu operation for mode 1 is limited to licensed spectrum only [RAN1, RAN2, RAN4]. Channel access mechanisms from NR-U shall be reused for sidelink unlicensed operation. Assess the applicability of sidelink resource reservation from Rel-16/Rel-17 to sidelink unlicensed operation within the boundaries of unlicensed channel access mechanism and operation. There are no specific enhancements for Rel-17 resource allocation mechanisms. If the existing NR-U channel access framework does not support the required SL-U functionality, WGs will make appropriate recommendations for RAN approval.

Physical channel design framework: Required changes to NR sidelink physical channel structures and procedures to operate on unlicensed spectrum. The existing NR sidelink and NR-U channel structure shall be reused as the baseline. There are no specific enhancements for existing NR SL feature. The study should focus on FR1 unlicensed bands (n46 and n96/n102) and is to be completed by RAN#98.

Meanwhile, issues related to channel access mechanism may be as follows.

Representatively, the following two directions may be considered. However, based on pre-configured condition(s)/event(s), method (A) and method (B) may be used together, or method (A) and method (B) may be switched mutually.

[Method (A)]: After generating a COT based on LBT, the UE may perform SL sensing/resource selection (SL grant generation) within the COT.

For example, if method (A) is applied, even if other UE Y occupies only some frequencies within an RB set in slot #N, a result of LBT for the RB set may be determined to be busy. Therefore, there may be a limitation that UE X cannot select/reserve the remaining FDMed frequency resources on slot #N.

For example, in the case of method (A), FDM may be difficult, but it may not be impossible. If UE X's LBT is not blocked (by UE Y) just before slot #N where UE Y occupies some frequency A, UE X may perform transmission on other frequency B of the corresponding slot #N. If UE X performs transmission on frequency B through COT initiation, UE X may perform back-off based LBT, and if a COT of UE Y can be shared, UE X may perform transmission based on one-shot LBT.

[Method (B)]: After performing SL sensing/resource selection (SL grant generation), the UE may determine whether or not to actually use the corresponding resource based on LBT.

For example, in the case of LBT, if UE X reserves/selects some frequency resources within an RB set at a certain time, other UE Y cannot reserve/select FDMed frequency resources for some frequency resources. However, if method (B) is used, this limitation can be alleviated.

For example, even in the case of method B, COT sharing operation may be considered. For example, assuming there are four resources, such as slot #N, slot #N+1, slot #N+2, and slot #N+3, multiple UEs (UE X, UE Y, ...) may perform LBT just before slot #N and may attempt FDM transmission on multiple frequencies in the corresponding slot #N. Through this, multiple UEs may plan transmission (through the same single COT) over the next four slots. In this case, if UE X fails LBT, UE X may perform only one-shot LBT (without back-off) just before the next slot #N+1 by detecting a COT of UE Y (in slot #N).

For example, if a result of LBT for a specific resource is busy, resource reselection may be triggered. This may be interpreted as a kind of SL re-evaluation/pre-emption.

For example, if an actual result of LBT is busy (and/or if actual LBT is not performed but LBT cannot be performed until just before a resource is reached due to selecting a back-off value that is too large), resource (re)selection may be triggered.

For example, depending on the criteria below, suitable/applicable methods may be different.

For example, depending on FBE or LBE, suitable/applicable methods may be different. For example, in the case of FBE, method (A) may be suitable, and in the case of LBE, method (B) may be suitable.

For example, depending on mode 1 or mode 2, suitable/applicable methods may be different. For example, in the case of mode 1, method (A) may be more suitable. Even in the case of mode 2, suitable methods may be different depending on whether it is a case of resource selection/reservation for single MAC PDU transmission (e.g., method (A)) or a case of resource selection/reservation for multiple MAC PDU transmission. For example, in the case of resource selection/reservation for multiple MAC PDU transmission, method (A) may be used for initial performance of resource selection and/or resource selection within the first period, and method (B) may be applied for periodic reservation resources that are out of a (maximum) COT.

For example, method (A) may be used when reselecting (or newly generating) all SL grants, or method (B) may be used when reselecting only a part of SL grants.

For example, resource(s) selected/reserved based on SL sensing may be limited to within a (maximum) COT, or resource(s) selected/reserved based on SL sensing may be out of a (maximum) COT.

For example, even if resource(s) selected based on SL sensing are out of a (maximum) COT, if SL resource exclusion is performed between SL-U UEs and actual usage of the selected resource(s) is determined based on LBT, there may not be a significant problem.

For example, through signaling such as SCI, a SL-U UE may inform of reserved resource(s) included in its COT and reserved resource(s) not included in its COT (e.g., reserved resource(s) located outside the COT or resource(s) reserved without a COT configuration (only by SL sensing)). In addition, other SL-U UEs that receive this may apply different weights (e.g., offsets for RSRP measurement values) in their resource exclusion procedures.

For example, from a COT sharing perspective, 1) multiple SL-U UEs may share the COT of a base station, or 2) UE-C may share the COT of UE-A and the COT of UE-B. For example, in case 1), the weight may be applied to resource(s) within the COT of the base station, and in case 2), it may be determined whether weighting can be applied depending on which UE's COT it is.

For example, while maintaining resource reservation information previously informed through SCI, a transmitting UE may additionally inform information on its COT duration length. In this case, a receiving UE may determine which resources are within the COT of the transmitting UE and which resources are outside the COT by combining the reservation resource and the COT duration.

For example, in method (A)/(B), for resource(s) in slot #N+K indicated/reserved by SCI(s) of other SL-U UE(s) received in slot #N, it is assumed that each DMRS RSRP measurement value(s) measured in slot #N is applied as power per RE. In this case, if a sum of power(s) of scheduled resource(s) on slot #N+K is greater than a threshold, slot #N+K may be excluded from selectable candidate resources.

For example, if SCI#1, SCI#2, and SCI#3 are transmitted in slot #N, and if slot #N+K is reserved in SCI#2 and SCI#3, and if a result of a UE summing DMRS RSRP measurement power of SCI #2 and SCI #3 is greater than a certain threshold, slot #N+K may be excluded from resource selection. For example, even if a SL UE reserves slot #N+K through SCI#2 (and/or SCI#3), it may not perform actual transmission due to LBT failure, so slot #N+K may be configured not to be excluded from resource selection considering this.

For example, if other UEs inform a receiving UE through SCI whether resources reserved in slot #N+K are within or outside their COT, the receiving UE may assign weights according to the information. For example, resource(s) within the COT may be excluded, and resource(s) outside the COT may be selected first.

Meanwhile, there may be issues whether to fully reuse NR-U LBT in SL-U.

For example, NR-U LBT and SL sensing operation may be supported in a hybrid form.

For example, the reserved resource pattern may be considered in a form that is as consecutive as possible in the time domain (considering coexistence with Wi-Fi and other SL-U), or methods such as relatively increasing the number of reserved resources for TB transmission or prioritizing resource selection positioned earlier within the selection window may be considered (considering the possibility of LBT failure).

For example, in the case of the number of reserved resources, the base station (or network) may determine the interference level of the corresponding unlicensed band (cell) and configure the number of reserved resources, or the number of reserved resources may be dynamically indicated in SCI by utilizing success/failure statistics of each UE.

For example, the SL sensing and the resource selection procedure may be changed considering the reserved resource pattern (based on consecutive slots).

For example, considering the possibility of LBT failure, when reserving/selecting the relatively large number of resources for TB transmission, it may be configured/allowed whether to use only candidate resources corresponding to X% based on the existing SL sensing/resource selection procedure, or to use a (pre-configured) ratio value larger than X%.

For example, considering the number of (consecutive) LBT failures, whether or not to allow additional resource selection/reservation operations and/or the number of corresponding resources may be configured/limited differently.

For example, a resource reservation method considering a SL minimum round trip time (RTT) gap (e.g., INI_PSSCH - TO - RETX_PSSCH) may be proposed.

For example, the existing PSFCH format targets only 1 bit. Therefore, a multi-bits format/structure (e.g., CP-OFDM PUCCH format 2 with 2 symbols) considering HARQ-ACK feedback omission/retransmission, etc. due to LBT failure, such as NR-U, may be newly considered.

For example, a form (e.g., method (A)) that ensures (necessarily) securing idle resources based on SL sensing within a formed COT-related starting slot (or configured slot) may be considered.

For example, a mechanism such as reporting (from a PHY layer to a MAC layer) (at least one or a pre-configured minimum number of) candidate resources (e.g., slots) considering REL-17 SL DRX active time (e.g., this can be interpreted as a kind of starting slot within a COT or slots that constitute a COT), and resource selection (by the MAC layer that received the report) may be considered.

For example, in the unlicensed band, coexistence between SL-U and NR-U Uu (or LAA Uu) (i.e., situations where a coexistence solution other than SCI utilization is required) needs to be considered. For this purpose, shifting/randomizing the starting position of SL-U transmission/reception (e.g., sub-symbol granularity) may be considered. For example, if the transmission boundary of SL-U is delayed from the system perspective, and then NR-U Uu channel transmission is detected, SL-U transmission may be skipped.

For example, prioritizing resources in front of the selection window may cause load balancing issues. Therefore, similar to the method used in NR-U CG, the starting position may be randomly selected per UE with sub-symbol granularity. Through this, if a specific UE preempts a channel, the channel becomes busy for other UEs, so that collisions can be minimized.

For example, to do this, a symbol duration that can accommodate random position selection may be provided in front of the automatic gain control (AGC) symbol in the current SL structure, or since the AGC symbol includes a copy signal, a random position may be selected at a pre-configured level (e.g., sample) within the AGC symbol.

For example, when considering coexistence between SL and Uu on the same U-band, especially when coexistence between Uu UL and SL, it is necessary to consider timing advance (TA) mismatch. If timing advance (TA) mismatch is not considered, since transmission of a Uu UL UE is ahead, this may act as a blocking factor for LBT of a SL UE. Of course, this makes sense in terms of prioritizing Uu, but a common reference timing may be configured to ensure fair operation between the two UEs. For example, random shifting may be applied based on the reference timing.

For example, re-evaluation and pre-emption operations of existing SL may be supported in SL-U.

For example, whether resource re-selection triggering is allowed (e.g., including consideration of SL DRX active time) in the case of LBT failure may be configured. For example, if a UE detects LBT failure, the UE may trigger resource re-selection. For example, if a UE performing LBT for an RB set detects LBT failure for the RB set, the UE may trigger/perform resource re-selection.

For example, a method for handling a case where a COT provided by the base station for DL or UL overlaps with a COT initiated by a mode 2 SL-U UE may be proposed.

For example, in the unlicensed band, SL resource pool configuration/SL communication using only cell-specific UL resources may be allowed, as before.

Alternatively, SL resource pool configuration/SL communication in flexible resources or DL resources or non cell-specific UL resources may be (additionally) allowed.

For example, depending on the type of resources on which SL communication is performed/allowed, the prioritization between UU and SL may be configured differently.

For example, a method of indicating/determining channel access type per channel (e.g., PSFCH, SL CSI REPORT) may be proposed.

For example, this may be indicated in a SL grant or may be indicated through SCI. If cyclic prefix extension (CPE) (CP may be extended forward like NR-U, or the last symbol signal in SL may be extended backward) and CAPC etc. also need to be indicated, LBT type and/or CPE and/or CAPC etc. may be indicated in the form of joint coding.

For example, the combination of LBT type, CPE, and/or CAPC may be informed through the SL grant or the SCI, and in the case of mode 2, at least, it may be pre-defined or (pre-)configured which LBT type/CPE/CAPC the transmitting UE will apply just before SCI and PSSCH transmission.

For example, COT sharing may be proposed.

For example, in the case of "COT sharing" operation, since a UE transmitting COT sharing information has already performed (type 1) LBT, a UE receiving it may be allowed to perform packet transmission using the type 2 series LBT procedure, not the type 1 LBT procedure that requires a (relatively) long time, within the shared COT. In other words, there is no constraint that the UE receiving the COT sharing information must perform transmission within the COT, and thus, a collision between WI-FI and NR-U UEs may occur within the shared COT.

For example, possible scenarios may be as follows.

For example, there may be a case where a COT initiated by SL-U UE 1 is shared with another SL-UUE2.

For example, COT sharing between target/source UEs may be considered limited to a pre-configured cast type (e.g., unicast).

For example, it is necessary to consider whether UE2 can unconditionally share COT with UE1's transmission. If UE1's transmission is actually transmitted by sharing UE0's COT, and UE2 transmits by sharing COT again, double COT sharing operation that is not currently supported in NR-U may occur. As one way to prevent this, when transmitting, UE1 may indicate through SCI whether the transmission is based on UE1's COT or the transmission is based on another UE0's shared COT. This needs to be considered for the following cases.

For example, a mechanism may be needed to prevent UE3 from mistaking UE2's transmission performed within a COT shared by UE1 as transmission performed based on a COT shared by UE2 to UE3.

For example, an indication on SCI may be used to signal which COT (or which UE-initiated COT) the related transmission was performed through. For example, the ID of the COT sharing initiator or the 1-bit indicator may be used to indicate whether the SCI transmitting UE is the COT initiator.

For example, transmission on the shared COT may be limited to SL communication with the COT initiator or related service communication.

For example, based on a source/destination ID on SCI, it may be implicitly derived which COT the transmission is using. For example, if bursty traffic is generated between source/destination pairs, related traffic transmission/reception may be completed quickly by allowing COT sharing to be used only by paired UEs. Therefore, it can be advantageous from a system perspective.

However, considering that resource selection and use of selected resource(s) are not limited to the ID, it is necessary to additionally consider whether it is appropriate for COT sharing to be tied to ID information (especially when applying an implicit indication method). For example, if only type 1 LBT-based transmission is indicated through 1 bit on the SCI, UE 4 receiving the SCI may share a COT regardless of the ID. In addition, UE 4 may prevent other UEs from sharing COT again by indicating that non-type 1 LBT is applied on its transmission-related SCI.

For example, the transmitting UE may explicitly inform through SCI whether the COT sharing target is limited to destination ID UE(s) or any UEs.

For example, a method may be proposed to solve the problem that excessive COT sharing with multiple UEs or multi-hop COT sharing affects WI-FI transmission.

For example, a method of adjusting an energy detection (ED) threshold may be different depending on a case of sharing a base station-COT and a case of sharing a UE-COT. In the case of sharing a base station-COT or a distant UE-COT, a low ED threshold may be used considering relatively high power transmission. In the case of sharing a close UE-COT, on the contrary, a high ED threshold may be used and transmit power may be lowered.

For example, when sharing a COT with a threshold number of UEs or more, or when sharing a multi-hop COT, a pre-configured (relatively low) ED threshold may be applied. For example, when using a relatively high ED threshold X, COT sharing operation based on a source/destination ID may be allowed, and when using a relatively low ED threshold Y, COT sharing with multiple UEs/multi-hop COT sharing operation may be allowed. For example, when sharing a COT with a threshold number of UEs or more, or when sharing a multi-hop COT, a pre-configured transmit power value of COT sharing information signaling may be applied.

For example, since the used ED threshold is signaled through SCI, etc., a UE receiving it may identify the related intent.

For example, when applying the above method, a cast type, a destination ID, a service type, etc. that can use selected/reserved resource(s) may be limited.

For example, there may be a case where SL-U UE 2, which has received COT sharing information initiated by SL-U UE 1, shares the COT sharing information with another SL-U UE 3.

For example, there may be a case where a COT initiated by a base station is shared with a SL-U UE (e.g., mode 1).

For example, there may be a case where SL-U UE 1, which has received COT sharing information initiated by a base station, shares it with another SL-U UE 2 (or SL-U UE 2, which has received COT sharing information initiated by SL-U UE 1, shares it with a base station).

For example, whether or not to apply the above operation may be configured differently depending on whether UE-B (e.g., UE 2) is in an OUT-OF-COVERAGE state. For example, UE-B (e.g., UE 2) may inform another UE (e.g., UE 1) of its status information through pre-configured signaling. For example, in the case of initiation of a base station, COT sharing may be restricted only between UEs within the corresponding cell coverage.

For example, whether COT sharing is allowed for OOC UEs or UEs within the coverage of other base stations (e.g., IDLE, INACTIVE, RRC CONNECTED) may be pre-configured.

For example, DCI 2_0 may indicate DL/UL/FLEXIBLE usage as well as SL usage. For example, since the content of DCI 2_0 is UE-specific, it may be indicated as UNKNOWN to legacy UEs for backward compatibility, and indicated as SL usage to SL-U UEs.

For example, SL usage may be provided through a semi-static DL/UL configuration. For example, this may be in the form of providing separate semi-static SL resources.

For example, basically, in the U-band (unlike the L-band), in addition to UL, FLEXIBLE symbols/slots may also be relaxed to be configured as SL resources.

For example, a method may be required to determine that SL-U UE 2 is within the coverage of the same cell as SL-U UE 1. For example, UE 2 may transfer to UE 1 information related to its cell or whether it is OOC through pre-defined signaling.

For example, an RB set indicator may designate some frequency resources available for SL (within all bandwidths). Note that in NR-U, COT information is common in an RB set.

For example, there may be a case where a base station that has received a COT initiated by SL-U UE1 (e.g. COT sharing information formed based on SL CG/DG) shares it for SL transmission (e.g. mode 1) or Uu communication (e.g. DL, UL) of SL-U UE 1/2.

For example, SL signaling for COT sharing may be specified.

For example, there may be condition(s) for sharing a COT initiated by a SL-U UE or condition(s) for allowing COT sharing.

For example, COT sharing may be related to SL mode.

For example, in the case of mode 1, COT sharing (similar to UL) may be used.

For example, there may be a COT sharing form between a base station and a mode 1 UE (e.g., UL-SL, DL-SL), or a COT sharing form between a mode 1 UE and another UE (e.g., SL-SL).

For example, in the case of mode 2, COT sharing may be useful for PSFCH-based SL HARQ feedback transmission/reception or SL CSI transmission/reception.

For example, a PSSCH transmitting UE may indicate parameters required for LBT (e.g., LBT type) just before PSFCH transmission through SCI. If the "COT duration length" information is indicated through SCI, an LBT type may be determined based on whether a PSFCH exists within or outside the COT duration. For example, if the PSFCH exists within the COT, the UE may perform one-shot LBT, and if the PSFCH exists outside the COT, the UE may perform back-off based LBT.

For example, transmission of data with SL HARQ feedback enabled may be configured/limited to be allowed only in a situation where a COT is formed/shared.

For example, a UE type related to COT sharing may be limited.

For example, COT sharing may be allowed only to UE(s) of a specific cast type (e.g., unicast). For example, even in the case of implicit indication, COT sharing may be allowed only between UEs participating in the related SL communication.

For example, COT sharing may be allowed to a UE that initiated/triggered PC5 RRC connection establishment.

For example, COT sharing may be allowed only to UE(s) in a relationship between a relay UE and a remote UE.

For example, a UE type of the initiator, which allows any UE to use COT sharing information, may be limited.

For example, COT sharing may be allowed to a UE performing packet transmission (or a UE having packets to be transmitted in a buffer).

For example, there may be a case where information on a UE performing packet transmission within a shared COT is identified.

For example, the information may be identified through reception of SL BSR information or a COT sharing request message (e.g., SCI), etc.

For example, when UE1 transmits SL BSR, it may be transmitted through COT initiation. For example, a UE that has received the SL BSR may share UE1's COT.

For example, a UE may operate basically based on method (B), but when an application event of method (A) occurs, COT sharing operation permission may be enabled.

For example, a (shared) COT initiated by a UE for UL transmission may be configured to be usable for SL transmission.

For example, depending on the relationship between the size of a UL frequency and a SL frequency, the relationship between UL transmit power and SL transmit power (e.g., in terms of determining an ED threshold that enables COT initiation), etc., whether the operation is allowed or not may be configured differently.

For example, when sharing a COT, it may be configured whether COT sharing information is in a form common to RB sets or in a form specific to an RB set.

For example, if there is no RB set indicator, COT sharing may be possible only in an RB set in which pre-configured control information (e.g., DCI 2_0, SCI) is detected. For example, if there is an RB set indicator in pre-configured control information, COT sharing may be possible only for the indicated RB set specifically.

For example, operation of a SL-U UE that receives COT sharing information may be specified.

For example, UE 2 detecting COT sharing information transmitted by UE 1 may perform resource selection by performing only SL sensing (or LBT of type 2 series) for the remaining time/frequency resources excluding the frequency resources indicated by SCI on the related RB set or the remaining (FDMed) frequency resources excluding the related RB set within the shared COT duration. For example, when applying method (A), UE 2 detecting COT sharing information transmitted by UE 1 may perform resource selection by performing only SL sensing (or LBT of type 2 series) for the remaining time/frequency resources excluding the frequency resources indicated by SCI on the related RB set or the remaining (FDMed) frequency resources excluding the related RB set within the shared COT duration.

For example, if a COT is generated only for RB set #1, and a UE intends to transmit SL data in RB set #2, the UE may be configured to perform random backoff (i.e., COT initiation).

For example, if UE 2 detects COT sharing information transmitted by UE 1 and does not use the COT shared information (e.g., UE 2 is not a target UE of COT sharing), UE 2 may exclude frequency resources of the related RB set or frequency resources indicated by SCI on the related RB set within the shared COT duration from its selectable candidate resource set (or target resource set on which SL sensing (or LBT) is performed).

For example, UE 1 may inform UE 2 of resource(s) included in a COT and resource(s) not included in the COT (e.g., reserved resource(s) located outside the COT or resource(s) reserved (only by SL sensing) without a COT configuration) through signaling such as SCI. Through this, UE 2 may identify a resource domain that can be selected only by SL sensing (or LBT of type 2 series).

For example, in the case of understanding related to an RB set index, it may be configured to have a common understanding between UEs. For example, in SL, the absolute frequency domain linked to the RB set index may be aligned between UEs.

For example, COT sharing may be performed in the form of an explicit indication, or COT sharing may be performed in the form of an implicit indication.

### (1) Implicit indication (e.g., increased FDM possibility)

For example, UE X may form a COT (e.g., 5 slots) based on type 1 LBT, and UE X may select resources on slot#1 and slot#2 within the COT through SL sensing, and UE X may signal this through SCI. In this case, another UE Y may select/use the remaining frequency resources other than frequency resources signaled by SCI on slots#1/2 or resources on slots#3/4/5 without performing type 1 LBT (based on LBT of type 2 series).

Herein, for example, UE X may inform through SCI that reserved resources on slots#1/2 are selected based on type 1 LBT. However, information such as the number of slots related to COT sharing may not be explicitly signaled.

For example, instead of information that resources are selected based on type 1 LBT, UE X may inform a COT duration length so that UE Y may identify UE X's resources. If UE X performed transmission by sharing COT of another UE, UE X may inform the COT duration length as "0".

For example, if this method is applied, it may alleviate the problem that UE Y cannot select/reserve resources related to (the next) slot #3 with a high probability because the (type 1) LBT result for slot #1/2 where UE X's reserved resources exist is determined as busy, and the problem that UE Y cannot select FDMed frequency resources for frequency resources reserved by UE X on slot #1/2 due to LBT characteristics.

### (2) Explicit indication (e.g., alleviation of complex LBT operation)

For example, for communication with another UE, it may be in the form of a UE forming a COT based on a form such as FBE or an existing COT sharing form and signaling it to another UE.

In this case, the signaling may be limited to other UEs or in the form of broadcast.

For example, there may be issues related to a physical structure.

For example, the slot-based structure of the existing SL considering the AGC issue (e.g., considering the issue between SL-U UEs) may be reused. For example, the slot-based structure of the existing SL considering the AGC issue (e.g., considering the issue between SL-U UEs) may not be reused.

Note that symbol level shifting/delay is not introduced in NR-U. Symbol level shifting/delay is not introduced in NR-U (e.g., considering the complexity of RE-SCRAMBLING, etc.).

For example, if a result of LBT performed before an AGC symbol is busy, additional LBT performance and data/control information transmission based on the result may be allowed within the AGC symbol duration, before actual data/control information transmission.

For example, for the operation, it may be limited to puncture only about a pre-determined length (e.g., half) of the AGC symbol.

For example, the transmittable time may be limited to three: before the AGC symbol, before the AGC 2ND half-symbol, and before the symbol immediately following the AGC symbol, so that three LBT opportunities may be given. If the AGC is required even partially, the transmittable time may be limited to only two: before the AGC symbol and before the AGC 2ND half-symbol.

Meanwhile, when performing transmission on a shared spectrum frequency band, a wireless device may transmit cyclic prefix extension (CPE) before (or together with) transmission to enable alignment of orthogonal frequency division multiplexing (OFDM) symbols and to reduce inter-symbol interference (ISI). In addition, the UE may perform CPE transmission to increase the probability that a channel that succeeds in LBT can be used for actual transmission. For example, when the UE succeeds in LBT for a specific channel, the UE may perform CPE transmission to prevent other devices from occupying the specific channel. In this case, if the time domains or the lengths of the time domains in which CPEs are performed for SL transmission (e.g., PSFCH transmission, S-SSB transmission, etc.) are different between different devices, the CPE of a specific device may cause LBT failure in other devices. That is, the CPE performed by the specific device for SL transmission may affect LBT for SL transmission of other devices.

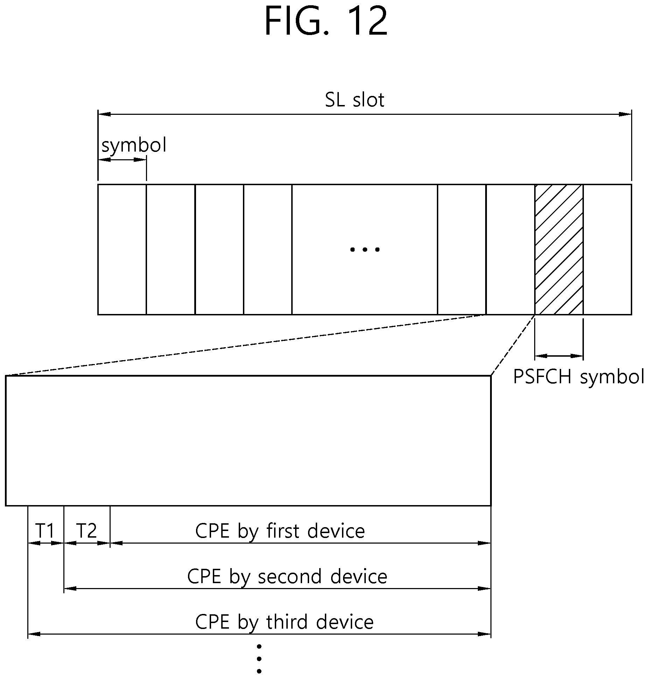

FIG. 12 is an illustration for explaining a problem caused by different CPEs. The embodiment of FIG. 12 may be combined with various embodiments of the present disclosure.

Referring to FIG. 12, in order to increase the probability of PSFCH transmission in an unlicensed band, devices may perform the CPEs. In this case, if the time domains or the lengths of the time domains in which the CPEs are performed are different between different devices, the CPE of a specific device may cause LBT failure in other devices. Specifically, for example, if the CPE lengths of the devices are different, the first device and the second device may fail LBT in the T1 duration due to the CPE by the third device, and the first device and the second device may not be able to perform PSFCH transmission. In addition, the first device may fail LBT in the T2 duration due to the CPE by the second device, and the first device may not be able to perform PSFCH transmission. Similarly, although not shown, the third device may also fail to LBT due to the CPE by another device, and the third device may not perform PSFCH transmission. For example, in the case of NACK-only feedback, if PSFCH transmission is dropped, NACK-to-ACK error (i.e., mistaking NACK for ACK) may occur, and the reliability of SL communication may deteriorate. For example, in the case of ACK/NACK feedback, if ACK transmission is dropped, unnecessary retransmission may occur, which may lead to unnecessary waste of resources.

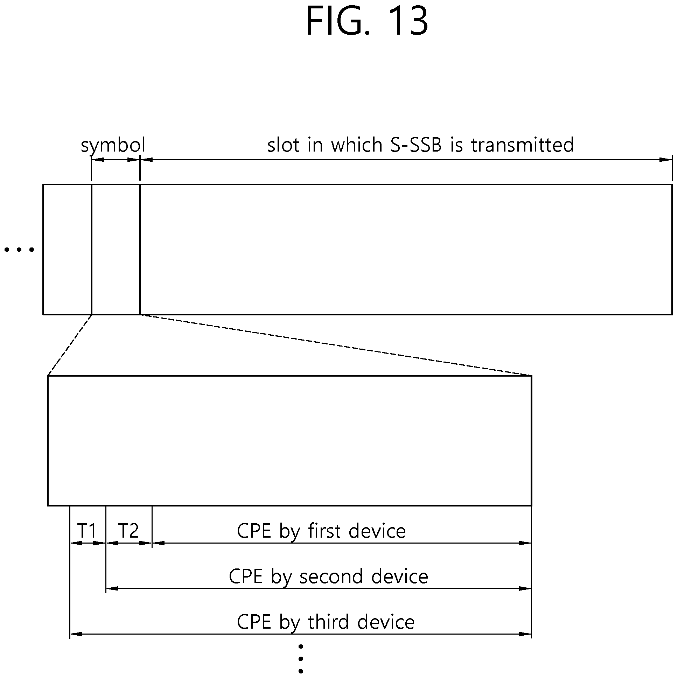

FIG. 13 is an illustration for explaining a problem caused by different CPEs. The embodiment of FIG. 13 may be combined with various embodiments of the present disclosure.

Referring to FIG. 13, in order to increase the probability of S-SSB transmission in an unlicensed band, devices may perform the CPEs. In this case, if the time domains or the lengths of the time domains in which the CPEs are performed are different between different devices, the CPE of a specific device may cause LBT failure in other devices. Specifically, for example, when the CPE lengths of the devices are different, the first device and the second device may fail LBT in the T1 duration due to the CPE by the third device, and the first device and the second device may not be able to perform S-SSB transmission. In addition, the first device may fail LBT in the T2 duration due to the CPE by the second device, and the first device may not be able to perform S-SSB transmission. Similarly, although not shown, the third device may also fail LBT due to the CPE by another device, and the third device may not be able to perform S-SSB transmission. The S-SSB may be transmitted by multiple devices at the same time/frequency based on single frequency network (SFN) operation. If S-SSB transmission is dropped as in the embodiment of FIG. 13, the coverage of synchronization signal transmission may be reduced, which may lead to a degradation in the performance of SL communication.

To address the above-mentioned problem, a change in the 1-symbol TX-RX switching structure of the existing SL may be required (e.g., CPE). For example, the last symbol within a SL slot, or a symbol between a PSSCH and a PSFCH within a slot (e.g., the form made-up by the PSFCH TX UE, the form made-up by the PSSCH TX UE and the PSFCH TX UE together, etc., considering that LBT types may be different for each of UEs transmitting CDMed PSFCHs) may be targeted. For example, this may also depend on whether the next slot without the PSFCH after the PSSCH is a slot to be used for Uu link or a slot still for SL. For example, if the PSSCH is followed by a SL slot, the UE may transmit the PSSCH last symbol more extended since the interference impact due to TA is reduced. For example, making up backwards or forwards may be beneficial to transmitting and receiving UE pairs. However, this may cause LBT blocking for (FDMed/CDMed) other UEs that require PSFCH transmission. Considering this, a gap for UE common LBT operation may be configured in front of the PSFCH resource (e.g., symbol).

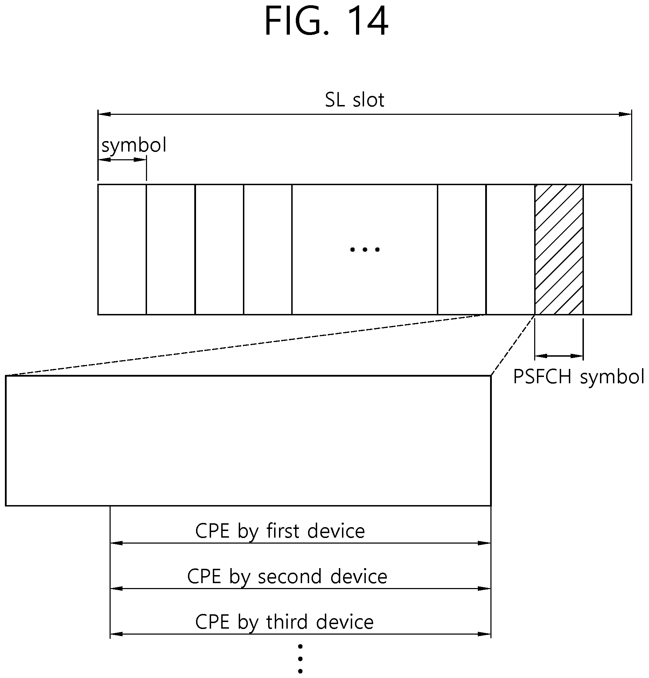

FIG. 14 shows a gap for UE common LBT operation in front of the PSFCH resource (e.g., symbol), based on an embodiment of the present disclosure. The embodiment of FIG. 14 may be combined with various embodiments of the present disclosure.

Referring to FIG. 14, the CPE may be performed in front of the PSFCH resource (e.g., symbol), and the length of the CPE may be configured to be the same. In this case, the problem that LBT failure of other devices occurs due to the CPE of a specific device can be solved. Through this, CDM/FDM may be enabled between UEs within a given set of PSFCH resources, and UE multiplexing may be enabled within the given PSFCH resources, and PSFCH transmission drop may be prevented. Through this, in the case of NACK-only feedback, the problem of NACK-to-ACK error (i.e., the problem of mistaking NACK for ACK) due to the drop of PSFCH transmission can be solved, and the reliability of SL communication in the unlicensed band can be guaranteed. For example, in the case of ACK/NACK feedback, the problem of unnecessary retransmission due to the drop of ACK transmission can be solved, and resources can be used efficiently in the unlicensed band.

For example, the corresponding UE common gap may be configured in front of the SL SSB resource (e.g., slot). Through this, the probability that SL data transmission (performed in the form of a TX burst) blocks SL SSB transmission can be reduced.

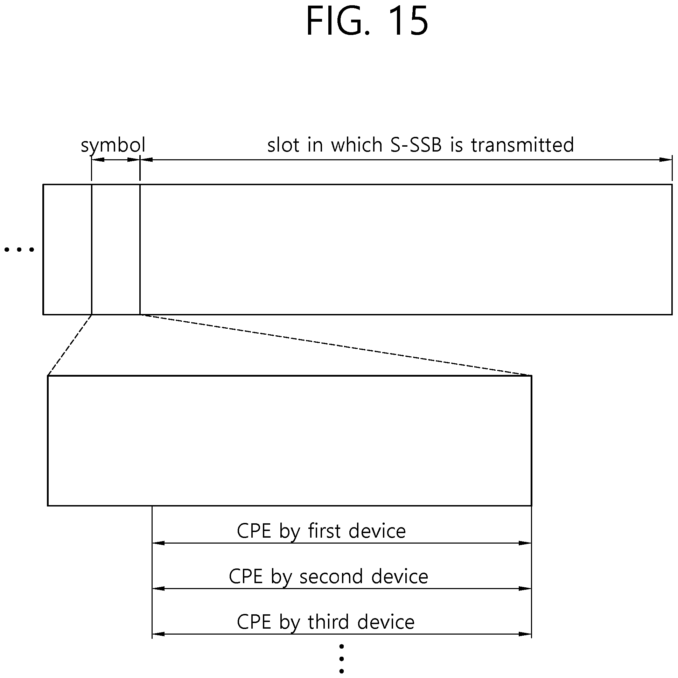

FIG. 15 shows a gap for the UE common LBT operation in front of the SL SSB resource (e.g., slot), based on an embodiment of the present disclosure. The embodiment of FIG. 15 may be combined with various embodiments of the present disclosure.

Referring to FIG. 15, the CPE may be performed in front of the SL SSB resource (e.g., slot), and the length of the CPE may be configured to be the same. In this case, the problem that LBT failure of other devices occurs due to the CPE of a specific device can be solved. Through this, the coverage of synchronization signal transmission can be improved by increasing the possibility of simultaneous S-SSB transmission by multiple devices in the unlicensed band. Accordingly, the detection capability of the synchronization signal can be improved, and the reliability of SL communication can be guaranteed.

For example, a coexistence problem with WI-FI may occur due to a PSFCH resource set existing in a resource pool, a SL-SSB resource set existing outside the resource pool, and reserved slots that cannot be configured as the resource pool, and a solution to this may be required.

For example, a coexistence of SL-SSB and PSCCH/PSSCH in a resource pool may be allowed.

For example, in the U-band, when performing SL communication, a form of gathering reserved slots into one place as an exception may be applied.

For example, if reserved slots are spread out on the time domain, reserved slots may be gathered into one place as much as possible. Through this, a resource pool configuration in the direction of no gap may be considered. For example, in order to further alleviate the delay that may occur when gathering reserved slots into one place, and considering that the actual shared COT length is at most 20 msec (or SL SSB transmission period is 160 msec), a hybrid form of gathering reserved slots into one place as much as possible within 20 msec (or 160 msec) may be considered.

For example, in the case of mode 2 SL grant, unlike the existing one, multiple SL HARQ processes may be operated (e.g., applied to reserved/selected resources within one reservation period).

For example, SL-U LBT operation that reuses the size/structure of an RB set of NR-U may be proposed.

For example, a resource pool configuration method considering an inter-cell guard band (e.g., a form in which multiple sub-channel sizes coexist) and a method for supporting existing SL sensing operation may be proposed.

For example, a method for using RB(s) in the guard band considering collision avoidance between SL-U UEs may be proposed.

For example, this may be an issue related to the SL subchannel structure design. For example, a UE may use guard RB(s) by merging the guard RB(s) with subchannel(s) located below (or above) it in the frequency domain.

For example, it may also be additionally considered in terms of satisfying power spectral density (PSD) requirements and coexistence with Uu channels (e.g., interlaced structure).

For example, whether a discovery burst is supported and related structures and procedures may be proposed.

For example, when considering LBT failure, the extended structure of SL SSB repetitions still needs to be considered. For example, when two SL SSB resources are extended considering LBT failure within one SL SSB period, a UE may perform only one pre-configured actual transmission based on LBT. Of course, if the LBT results for both SL SSB resources are determined to be busy, SL SSB transmission may be omitted.

For example, if the UE intended to transmit SL SSB twice at 30 kHz, the UE may configure a window for transmitting SL SSB three or four times, and the UE may transmit SL SSB at most two times within the window starting from the time when LBT succeeded.

For example, there may be congestion control issues.

For example, a UE may reuse the congestion control mechanism of the existing SL. For example, the UE may not reuse the congestion control mechanism of the existing SL. For example, the congestion control mechanism may be applied to UL TX.

For example, in addition to the existing congestion, LBT failure events may occur, which may be misjudged as worsening congestion. Therefore, a form in which proper congestion level determination is performed excluding the effect of LBT failure may be considered.

For example, in addition to RSSI measurement information reported by a UE to a base station in NR-U, additional/separate metric reporting may be required.

For example, SL RSSI measurement and SL CBR (or SL RSSI measurement value) may be reported (to the base station). In addition, for example, modification to existing SL CBR-based congestion control (e.g., mode 2) and maximum retransmission count limit (e.g., mode 1 CG) may be required.

For example, when measuring SL RSSI or evaluating SL CBR, it may be necessary to consider a domain where WI-FI interference is eliminated as much as possible. For example, within a COT formed by the SL-U TX UE itself, (a form in which only SL RSSI measured within a base station/UE INITIATED SHARED COT, within an FBE related duration (secured based on LBT), within SILENCE resources common to the SL-U UE, within a TX-RX switching symbol of the SL-U, etc. is used) the number of SL RSSI measurement slots within the SL CBR evaluation window may be less than or equal to a pre-configured threshold number. In this case, for example, the pre-configured default CBR value may be used.

For example, if FBE operation is applied, there may be no need to consider coexistence with WI-FI. Therefore, in this case, the existing SL RSSI measurement/SL CBR-based congestion control and maximum retransmission count limit may be applied.

For example, in terms of the SL RA mechanism (e.g., since CBR also affects SL grant generation), the impact of the above issue needs to be considered.

For example, there may be coexistence issues between UL and SL.

For example, from the perspective of one UE, whether BACK-TO-BACK TX between UL CG TX and SL TX is allowed may be configured. For example, whether BACK-TO-BACK TX is allowed may be configured differently depending on the frequency resource size relationship, the relationship between CAPCs, the relationship between UL/SL TX POWER, etc.

For example, considering that the maximum power configured between UL TX (e.g., P_CMAX_H) and SL TX is independent, when considering UL TX and SL TX within one COT, an ED threshold may be derived/applied based on a maximum value (or a minimum value or a (weighted) average value) of maximum power values.

For example, considering that the maximum power configured between UL TX (e.g., P_CMAX_H) and SL TX is independent, when considering UL TX and SL TX within separate COTs, an independent ED threshold may be derived/applied based on each maximum power value, or an ED threshold may be derived/applied based on a maximum value (or a minimum value or a (weighted) average value) of maximum power values.

For example, in order to allow the above operation, the relationship between the UL frequency and SL frequency size needs to be considered, and additionally, the relationship between the UL TX power and the SL TX power needs to be considered. For example, when determining an ED threshold for LBT, the COT initiation may be performed by performing LBT based on an energy detection threshold (EDT) configured based on the larger TX power among the two.

For example, UL-SL prioritization may be proposed.

For example, when LBT fails for TX with higher priority, whether to allow TX with lower priority overlapping in the time domain may be configured. For example, when LBT fails for TX with higher priority, TX with lower priority overlapping in the time domain may be allowed. For example, after determining whether to allow TX based on the LBT result, the final prioritized TX may be determined. For this purpose, for example, the UE may perform preparation for TX with higher priority and TX with lower priority at the same time, or processing may be involved, such as entering the preparation process of TX with lower priority immediately based on the LBT result.

For example, whether the UL-SL prioritization rule of the existing SL can be reused may be configured.

For example, BACK-TO-BACK between SL and SL may be proposed.

For example, BACK-TO-BACK between mode 1 SL and mode 2 SL or BACK-TO-BACK between mode 2 SL and mode 1 SL may be allowed. For example, if there is the remaining COT related to mode 1 SL shared by a base station, it may be used for mode 2 SL transmission.

For example, there may be issues related to link management.

For reference, although it was discussed that UL LBT failure handling is operated per channel in NR-U, it was not introduced in the standard. That is, UL LBT failure handling is operated in carrier common in NR-U. This is because it was judged that it can be covered by appropriate configuration of related parameters in the case of NR-U.

For example, DTX-based SL RLF enhancement considering LBT failure (e.g., especially, NACK-only case) may be proposed.

For example, LBT failure itself may not represent a broken SL quality.

For example, a priority order value of an LBT failure MAC CE needs to be defined in SL logical channel prioritization (LCP).

For example, LBT failure (and/or RLF declaration) may be managed/operated per unicast link. For example, LBT failure (and/or RLF declaration) may be managed/operated commonly for unicast links (e.g., per physical UE) or commonly for any cast types.

For example, switching between multiple pre-configured SL-U carriers (and/or SL-U BWPs) may be allowed.

For example, NACK-only feedback operation in the U-band may be allowed only for non-LBT scenarios (e.g., COT sharing).

For example, path switching (e.g., Uu or ITS-dedicated) may be allowed when LBT failure occurs.

For example, SL session establishment and management related signals may be transmitted over a Uu carrier or an ITS-dedicated carrier, not the U-band.

For example, depending on mode 1/2, LBT failure handling may be different.

For example, in the case of mode 1, LBT failure may be reported to a base station. For example, in the case of mode 2, LBT failure may be handled based on predefined rules (e.g., switching between carriers or BWPs or RB sets or pools, resource reselection triggering).

For example, a method for handling LBT failure in groupcast or broadcast may be proposed.

For example, SL-RSSI information reporting may be required. For example, only the remaining values except SL-U UE related RSRP may be used.

For example, there may be issues related to COT sharing. Below, COT sharing scenarios are described.

For example, a COT initiator may be as follows:
1) UE A
   - COT initiation based on UL resources
   - COT initiation based on mode 1 SL resources or mode 2 SL resources
2) Base station of UE A
   - Restriction based on connected status of UE A
3) Base station of UE B (e.g. destination UE of UE A)
   - Restriction based on connected status of UE B

For example, a COT responder may be as follows:

### 1) UE A

### 1.1) If COT information initiated by the base station of UE-A is shared

- UE A performs mode 1 SL TX using type 2 LBT within the shared COT
- UE A performs mode 2 SL TX using type 2 LBT within the shared COT
- UE A performs PSFCH TX using type 2 LBT within the shared COT
- UE A performs UL TX using type 2 LBT within the shared COT

### 2) UE B

### 2.1) If COT information initiated by UE-A is shared from UE A

### 2.1.1) Initiated COT based on UL resources

- UE B performs mode 1 SL TX using type 2 LBT within the shared COT
- UE B performs mode 2 SL TX using type 2 LBT within the shared COT
- UE B performs PSFCH TX using type 2 LBT within the shared COT
- UE B performs UL TX using type 2 LBT within shared COT

For example, it may be desirable to target only a specific link type on the shared COT. For example, considering the possibility that an applied ED threshold is different, it may be desirable to target only a specific link type on the shared COT.

For example, in the case of current NR-U, when sharing a UL COT, if an ED threshold configured by the base station is used, the base station may adjust its TX power within the shared COT considering this. Otherwise (e.g., applying an ED threshold based on maximum power of the UE), UL COT sharing may not be possible.

For example, if the base station recognizes that UE A and UE B are within the coverage of the same base station, and maximum power information of UE A/B, etc., the base station may indicate whether to share COT between UE A and UE B.

### 2.1.2) Initiated COT based on mode 1 SL resources or mode 2 SL resources

- UE B performs mode 1 SL TX using type 2 LBT within shared COT
- UE B performs mode 2 SL TX using type 2 LBT within shared COT
- UE B performs PSFCH TX using type 2 LBT within shared COT
- UE B performs UL TX using type 2 LBT within shared COT

### 2.2) If COT information initiated by the base station of UE-A is shared from UE A

- UE B performs mode 1 SL TX using type 2 LBT within shared COT
- UE B performs mode 2 SL TX using type 2 LBT within shared COT
- UE B performs PSFCH TX using type 2 LBT within shared COT
- UE B performs UL TX using type 2 LBT within shared COT

### 2.3) If COT information initiated by the base station of UE-B is shared (or if the base station of UE-B indicates type 2 LBT operation)

- UE B performs mode 1 SL TX using type 2 LBT within the shared COT
- UE B performs mode 2 SL TX using type 2 LBT within the shared COT
- UE B performs PSFCH TX using type 2 LBT within the shared COT
- UE B performs UL TX using type 2 LBT within the shared COT

### 3) Base station of UE A

### 3.1) If COT information initiated by UE-A is shared from UE A

### 3.1.1) initiated COT based on UL resources

- Mode 1 SL resource allocation/scheduling of UE A (based on type 2 LBT) within the shared COT
- UL resource allocation/scheduling of UE A (based on type 2 LBT) within the shared COT

### 3.1.2) Initiated COT based on mode 1 SL resources or mode 2 SL resources

- Mode 1 SL resource allocation/scheduling of UE A (based on type 2 LBT) within the shared COT
- UL resource allocation/scheduling of UE A (based on type 2 LBT) within the shared COT

### 4) Base station of UE B

### 4.1) If COT information initiated by UE-A is shared from UE B

### 4.1.1) Initiated COT based on UL resources

- Mode 1 SL resource allocation/scheduling of UE B (based on type 2 LBT) within the shared COT
- UL resource allocation/scheduling of UE B (based on type 2 LBT) within the shared COT

For example, it may be desirable to target only a specific link type on the shared COT. For example, considering the possibility that an applied ED threshold is different, it may be desirable to target only a specific link type on the shared COT.

### 4.1.2) Initiated COT based on mode 1 SL resources or mode 2 SL resources

- Mode 1 SL resource allocation/scheduling of UE B (based on type 2 LBT) within the shared COT
- UL resource allocation/scheduling of UE B (based on type 2 LBT) within the shared COT

### 4.2) If COT information initiated by the base station of UE-A is shared from UE B

- Mode 1 SL resource allocation/scheduling of UE B (based on type 2 LBT) within the shared COT
- UL resource allocation/scheduling of UE B (based on type 2 LBT) within the shared COT

### 5) UE C (e.g., UE that received COT information initiated by UE-A or COT information initiated by the base station of UE-A through another UE) - If another UE and UE C are target UEs of UE A, and UE C does not receive COT sharing information transmitted by UE A

### 5.1) If COT information initiated by UE-A is shared from another UE

### 5.1.1) Initiated COT based on UL resources

- UE C performs mode 1 SL TX using type 2 LBT within the shared COT
- UE C performs mode 2 SL TX using type 2 LBT within the shared COT
- UE C performs PSFCH TX using type 2 LBT within the shared COT
- UE C performs UL TX using type 2 LBT within the shared COT

### 5.1.2) Initiated COT based on mode 1 SL resources or mode 2 SL resources

- UE C performs mode 1 SL TX using type 2 LBT within the shared COT
- UE C performs mode 2 SL TX using type 2 LBT within the shared COT
- UE C performs PSFCH TX using type 2 LBT within the shared COT
- UE C performs UL TX using type 2 LBT within the shared COT

### 5.2) If COT information initiated by the base station of UE-A is shared from another UE

- UE C performs mode 1 SL TX using type 2 LBT within the shared COT
- UE C performs mode 2 SL TX using type 2 LBT within the shared COT
- UE C performs PSFCH TX using type 2 LBT within the shared COT
- UE C performs UL TX using type 2 LBT within the shared COT

For example, the shared COT may be defined in SL-U.

For example, after an initiator shares shared COT information with a responder, it may be prevented from performing its own transmission within the shared COT. Alternatively, for example, after an initiator shares shared COT information with a responder, whether it is allowed to perform its own transmission within the shared COT may be configured.

For example, if the transmission is allowed, a half-duplex/SL resource collision problem between the initiator and the responder may occur.

For example, on the shared COT, PSCCH/PSSCH-based general data transmission (e.g., GC) of responder(s) may be restricted. Alternatively, for example, on the shared COT, whether PSCCH/PSSCH-based general data transmission (e.g., GC) of responder(s) can be allowed may be configured.

For example, in the case of GC, signaling may be required to instruct member UEs to partition the shared COT duration. For example, in addition to shared COT information being identified based on a destination ID, in the case of GC, signaling may be required to instruct member UEs to partition the shared COT duration.

For example, issues such as MAC CE priority may be considered.

For example, (unlike PSFCH) PSCCH/PSSCH transmission may be allowed by distinguishing the COT initiator.

For example, when multiple shared COT information exist, a method for handling this may be proposed.

### 1) A situation where a TX UE receives shared COT information from multiple target UEs (e.g., GC)

For example, the TX UE may preferentially select resource(s) on the common COT duration or on the COT duration that overlaps relatively more. Note that when this method is applied, the half-duplex/SL resource collision problem between UEs participating in the GC may be aggravated.

For example, prioritized/valid information may be filtered using RSRP measurement values for channels/signals providing shared COT information, or distance between the initiator and the responder, etc. For example, this allows the responder to prioritize SHARED COT information shared by the initiator that is likely to have similar LBT results to its own.

For example, only shared COT(s) that cover SL grant-related resources generated by the TX UE/allocated by the base station or that cover the amount of resources determined to be required for packet transmission by the TX UE may be considered restrictively.

For example, for a resource domain that the TX UE is already using for receiving SL data from other UEs (and if an RSRP measurement value for the related channel/signal is less than or equal to a threshold value), only shared COT(s) not overlapped with a resource domain where an RSSI value measured by the TX UE is greater than or equal to a threshold value may be considered restrictively.

### 2) A situation where a shared COT received from a SL PEER UE overlaps/exists with a shared COT received from a base station (e.g., SL TX allowed domain)

### 3) A situation where different SL service/cast type-related COTs derived from the same CAPC value overlap/exist

For example, in the case of a shared COT in NR-U, only CAPC transmission with a priority equal to or less than the associated CAPC value may be allowed.

For example, this restriction may be applied even when a UL COT is used in SL. Alternatively, for example, whether the above restriction is applied when the UL COT is used in SL may be configured.

For example, data-related CAPC information of a SL PEER UE may be transferred to an initiator through pre-configured signaling.

For example, ED threshold (i.e., maximum transmit power) based restriction may be applied. Alternatively, for example, it may be configured whether the restriction based on the ED threshold (i.e., maximum transmit power) is applied.

For example, in mode 1 operation, a responder UE may report shared COT information received from a SL PEER UE to a base station, so that the base station may allocate mode 1 resource(s) within the shared COT.

For example, NACK-only based feedback operation (or SL CSI reporting operation) may be allowed only based on a shared COT.

For example, FBE may be supported. For example, this may target a situation where even other NR-U operations do not coexist in REL-17. For example, in the case of SL-U, FBE in its current form may not be easily applied.

For example, if SL TX (e.g., mode 2) is performed on the first slot of UE FFP, additional techniques may be required to inform a base station of COT sharing.

For example, COT sharing to the base station may be limited to a case where UL transmission (e.g., UL CG/DG, PUCCH, CFRA PRACH) is performed on the first slot of the UE FFP.

For example, the following types of behavior may be allowed within the UE FFP:
- SL CG TX on the first slot + UL CG/DG TX on the subsequent slot within UE FFP
- SL DG TX on the first slot + UL CG/DG TX on the subsequent slot within UE FFP
- UL CG TX on the first slot + SL CG/DG TX on the subsequent slot within UE FFP
- UL DG TX on the first slot + SL CG/DG TX on the subsequent slot within UE FFP
- It may be limited to the same link type.

For example, it may be proposed how to configure a UE FFP configuration in OOC (or IDLE/INACTIVE state (e.g. RRC release message can be used to configure a UE specific UE FFP configuration)).

For example, in the case of unicast, it may be negotiated between UEs through PCS RRC signaling.

For example, in the case of groupcast, UE FFP domains may be randomized based on destination IDs. For example, randomization of offset values may not be required.

For example, when determining an FFP value, the relationship (e.g., divisor) with a SL SSB period, a bitmap period value of a resource pool (considering the periodic characteristic in SL), etc. may be considered.

For example, after attempting to detect TX by another UE on the first slot, a UE may act as a responder UE.

For example, at the beginning of the FFP, a collision may be tolerated, but the minimum noncritical signals necessary to secure COT (e.g. DUMMY RS, or data that can be resolved later by HARQ even if a collision occurs) may be transmitted.

For example, based on the above method, even if a SL UE selects a resource that is not aligned to the FFP starting time, the SL UE may transmit a DUMMY resource at the FFP starting time. If the COT initiation of SL UEs is allowed as above, a resource domain in which the DUMMY signal can be transmitted at the FFP starting time may be pre-configured.

For example, a form may be proposed in which multiple FFPs with the same period but different offsets are configured and a UE selects one (e.g., OOC).

In the case of in-coverage (IC), a method in which an IDLE/INACTIVE UE selects an offset based on a UE ID may be proposed.

For example, COT sharing or COT formation for SSB TX may be proposed.

For example, SL RX (expected) resources may also be considered when a UE provides a COT initiated by the UE to a base station. For example, this may be in a form of excluding the SL RX (expected) resources.

For example, a method of compensating SL transmission when a UL COT cannot be used for SL may be proposed.

For example, if a shared COT duration is not covered by a SL resource pool, the duration may be used only for UL purposes.

For example, COT sharing may be allowed only between UEs belonging to the same base station. For this purpose, information to be exchanged/reported may be proposed.

For example, in the case of a PSFCH, an RX UE may transmit the PSFCH based on COT sharing of a TX UE.

For example, in the case of SL CSI reporting, another UE may transmit SL CSI reporting based on COT sharing of UE triggering SL CSI reporting.

For example, UE2 may perform transmission based on COT sharing information of UE1. For example, COT sharing information may be transmitted through SCI, or a SL MAC CE for COT sharing information may be newly defined.

For example, COT sharing information may be transmitted through a PSFCH. For example, this may be applied limitedly to unicast or relay. For example, this may be extended to multicast as well.

For example, UE COT sharing may be determined depending on whether another UE is in SL mode 1 or SL mode 2. For example, since a UE operating based on SL mode 1 may operate based on a COT of a base station, a UE COT may be shared only with a SL mode 2 UE. For example, the SL mode of the UE may be informed to another UE by SCI or a MAC CE. For example, inter-UE coordination request MAC CE may be used.

For example, UE COT sharing may be determined based on whether another UE is connected with unicast or is in the same cell.

For convenience of description, the following assumption may be made. For example, in the case of LBE, F1 may refer to ITS or licensed or non-unlicensed band, and F2 may refer to unlicensed band, and UE-A may be a SL mode 1 source UE, and UE-B may be a destination UE of a PSSCH transmitted by UE-A, and UE-C may be a SL mode 2 source UE, and UE-D may be a destination UE of a PSSCH transmitted by UE-C.

For example, in case 1-1, a COT initiator may be a base station.

For example, in case 1-1, if UE-A is instructed to perform one-shot LBT when receiving a SL grant from the base station, or if UE-A receives COT information of the base station through F1 or F2 (as in NR-U) and recognizes that SL resource(s) is included in the base station's COT, UE-A may transmit SL data after one-shot LBT through COT sharing. Otherwise, UE-A may transmit SL data after random-backoff LBT.

For example, in case 1-1, if UE-B receives COT information of the base station through F1 or F2 (as in NR-U) and recognizes that PSFCH resource(s) to be transmitted to UE-A is included in the base station's COT, UE-B may perform PSFCH transmission to UE-A after one-shot LBT through COT sharing. Alternatively, if UE-B receives COT information from UE-A and recognizes that PSFCH resource(s) to be transmitted to UE-A is included in the UE-A's COT, UE-B may perform PSFCH transmission to UE-A after one-shot LBT through COT sharing. This may be only a case where UE-A newly generates the COT after random-backoff LBT and only a case where COT sharing between UEs is allowed. Otherwise, for example, UE-B may perform PSFCH transmission to UE-A after random-backoff LBT.

For example, in case 1-2, a COT initiator may be UE-A.

For example, in case 1-2, if UE-A is instructed to perform random-backoff LBT when receiving a SL grant from a base station, or if UE-A recognizes that SL resource(s) is not included in the base station's COT, UE-A may transmit SL data after random-backoff LBT.

For example, in case 1-2, if UE-B receives COT information of a base station through F1 or F2 (as in NR-U) and recognizes that PSFCH resource(s) to be transmitted to UE-A is included in the base station's COT, UE-B may perform PSFCH transmission to UE-A after one-shot LBT through COT sharing. Alternatively, if UE-B receives COT information from UE-A and recognizes that PSFCH resource(s) to be transmitted to UE-A is included in the UE-A's COT, UE-B may perform PSFCH transmission to UE-A after one-shot LBT through COT sharing. For example, this case may be limited to a case where COT sharing between UEs is allowed. Otherwise, for example, UE-B may perform PSFCH transmission to UE-A after random-backoff LBT.

For example, in case 2-1, a COT initiator may be a base station.

For example, in case 2-1, if UE-C receives COT information of the base station through F2 (as in NR-U) and recognizes that SL resource(s) is included in the base station's COT, UE-C may transmit SL data after one-shot LBT through COT sharing. Otherwise, for example, UE-C may transmit SL data after random-backoff LBT.

For example, in case 2-1, if UE-D receives COT information of the base station through F2 (as in NR-U) and recognizes that PSFCH resource(s) to be transmitted to UE-C is included in the base station's COT, UE-D may perform PSFCH transmission to UE-A after one-shot LBT through COT sharing. Alternatively, if UE-D receives COT information from UE-C and recognizes that PSFCH resource(s) to be transmitted to UE-C is included in the UE-C's COT, UE-D may perform PSFCH transmission to UE-C after one-shot LBT through COT sharing. This may be only a case where UE-C newly generates the COT after random-backoff LBT and only a case where COT sharing between UEs is allowed. Otherwise, for example, UE-D may perform PSFCH transmission to UE-C after random-backoff LBT.

For example, in case 2-2, a COT initiator may be UE-C.

For example, in case 2-2, if UE-C recognizes that SL resource(s) is not included in a base station's COT, UE-C may transmit SL data after random-backoff LBT.

For example, in case 2-2, if UE-D receives COT information of a base station through F2 (as in NR-U) and recognizes that PSFCH resource(s) to be transmitted to UE-C is included in the base station's COT, UE-D may perform PSFCH transmission to UE-C after one-shot LBT through COT sharing. Alternately, for example, if UE-D receives COT information from UE-C and recognizes that PSFCH resource(s) to be transmitted to UE-C is included in UE-C's COT, UE-D may perform PSFCH transmission to UE-C after one-shot LBT through COT sharing. For example, this case may be limited to a case where COT sharing between UEs is allowed. Otherwise, UE-D may perform PSFCH transmission to UE-C after random-backoff LBT.

For example, when there is COT#1 generated by a base station and COT#2 generated by UE-A (or when there is COT#1 generated by UE-B and COT#2 generated by UE-A), operation may be proposed in a case where a third UE knows information of both COT#1 and COT#2. In the case of the existing NR-U, a similar situation may occur when two or more UEs transmit CG-PUSCH and each informs a base station of different COT information through CG-UCI. In this case, for example, the base station may perform COT sharing based on the maximum/minimum duration of the two COTs. For example, in NR-U or LTE LAA, the base station may share any COT autonomously. Meanwhile, in the case of SL, different operations may be required. In the above example, if there are COT#1 generated by the base station and COT#2 generated by the SL UE at the same time, COT#1 generated by the base station may be prioritized. For example, in the above example, if two SL UEs individually generate COT, the third UE may perform SL communication based on single COT shared information.

For example, in order to increase CW_p when receiving NACK, a feedback-disabled TB may be temporarily changed to feedback-enabled. For example, if all HARQ-ACK feedbacks of PSSCH(s) belonging to the reference duration are disabled, one or some PSSCH transmissions may be temporarily changed to feedback-enabled. In this case, a physical layer of a transmitting UE may autonomously change the feedback-disabled TB to a feedback-enabled TB and instruct it through SCI, and the physical layer of the transmitting UE may or may not instruct a MAC layer to this. For example, this may be limited to a case where a resource pool supports feedback-enabled. For example, only a feedback-enabled resource pool may be selected for logical channel(s) for unicast/groupcast in the U-band.

For example, SL reservation may be performed in a COT. In this case, the following methods may be available.
- Method 1: A UE may not obtain a COT that includes resource(s) indicated by other UEs through SCI.
- Method 2: A UE may obtain a COT regardless of the proposal of the method 1, and the UE may reserve resources from N+1 to N+k-1 consecutively only up to resources N+k indicated by other UEs through SCI.
- Method 2-1: For N+k and subsequent resource(s), the UE may reselect the corresponding resource(s) through re-selection/re-evaluation to enable consecutive transmission. If re-selection is not possible, the UE may stop transmission immediately after N+k-1.
- Method 3: A UE may obtain a COT regardless of the proposal of the method 1, and the UE may reserve resources from N+1 to N+m consecutively, except for resources N+k indicated by other UEs through SCI. Herein, m < k, or m > k.
- Method 3-1: For resources N+k, the UE may reselect the corresponding resource(s) through re-selection/re-evaluation to enable consecutive transmission. For example, if re-selection for resources N+k is not possible, the UE may stop transmission immediately after N+k-1. For example, if re-selection for resources N+k is not possible, the UE may not stop transmission immediately after N+k-1.

For example, a separate window may be configured for S-SSB transmission that guarantees a base station's COT as much as possible. For example, by configuring the SL window, S-SSB may be transmitted based on type 2A/B/C in the base station's COT.

For example, there may be issues related to physical channel design and/or structure and procedure.

For example, in the case of SL-U, it has been discussed as a main target for commercial use cases. However, since there may be broadcast signaling of various services (e.g., for session establishment/discovery purposes), broadcast-type signaling related to SL positioning, etc., it is necessary to consider cast types other than unicast when developing SL-U design/technology.

For example, a resource pool structure needs to be proposed.

For example, a resource pool in the time domain needs to be defined.

For example, for SL communication between an RRC CONNECTED UE and an IDLE UE, or between an IC UE and an OOC UE, a common understanding of SL resources may be required.

For reference, a time resource indicator value (TRIV) and a SL resource reservation interval may be operated/interpreted based on logical indexes belonging to a resource pool.

For example, a definition of minimum resources requiring common understanding and extended resources (e.g., SL communication target between IC UEs) may be proposed. In this case, a mechanism for additionally signaling the extended resources to other UEs may be required.

For example, a distinction between a pool where PSFCH transmission/reception is configured/allowed and a pool where it is not may be required.

For example, a configuration of an exceptional pool (e.g., a pool where random resource selection is performed) may be required.

For example, a rule related to a sub-channel structure may be proposed. For example, it is necessary to define a mapping rule between the following parameters.
- RB set index
- Interlace index
- Sub-channel index

For example, considering a SL structure in which resources are allocated by a combination of a TRIV and a frequency resource indicator value (FRIV), undesirable resource allocation may occur when the FRIV crosses RB sets. For example, if two resources are selected, the two resources are consecutive in the time domain, but the two frequency resources selected by the FRIV may belong to different RB sets. A method to reduce TRIV/FRIV bit-width by utilizing the rules may be considered.

For example, in the case of existing SL, only scheduling based on consecutive sub-channel indexes may be possible. For example, if the FRIV indicator on the existing SCI is reused, the above principle may be maintained. Alternatively, for example, since the FRIV itself indicates "starting sub-channel index" and "the number of sub-channels in a continuous position on the frequency domain used for PSSCH scheduling", this principle may be used as is. On the other hand, the scheduling principle based on the consecutive sub-channel indexes may not be applied.

For example, there may be a form in which RB bundles having the same interlace index for each RB set have consecutive sub-channel indexes. For example, this part may have two directions.

The first is to sequentially allocate each interlace in a line in the manner of RB set index first - interlace index second (e.g., in the case of two RB sets, interlace 0 in RB set 0, interlace 1 in RB set 0, ..., interlace 0 in RB set 1, interlace 1 in RB set 1, ...), and the second is to sequentially allocate each interlace in a line in the manner of interlace index first - RB set index second (e.g., interlace 0 in RB set 0, interlace 0 in RB set 1, interlace 1 in RB set 0, interlace 1 in RB set 1, ...).

For example, sub-channel indexing may be performed with RB set granularity (e.g., when applying the scheduling principle based on consecutive sub-channel indexes, the probability of TX drop due to LBT failure can be reduced). Alternatively, for example, sub-channel indexing may be performed with SL BWP granularity (similar to NR-U). Considering in-band emission, consecutive sub-channel indexes (within an RB set) may be configured to have gaps in the frequency domain.

For example, based on the above-described operation, even if a SL UE transmits across multiple RB sets (unlike an NR-U UE), the SL UE may not transmit on resources on a guard band in the middle of the multiple RB sets. Thus, the impact on in-band emission with/between other UEs may be reduced (although its own peak-to-average power ratio (PAPR) may be slightly affected).

For example, it is necessary to review both cases where an interlace structure is configured and where it is not.

For example, if the interlace structure is not configured, it is necessary to review whether the existing SL sub-channelization structure can be reused. In addition, it is necessary to review whether there are any problems, such as PSD requirement satisfaction, guard band existence, etc.

For example, this may be an issue of how to perform sub-channelization when the guard band is configured but the interlace is not configured. For example, a sub-channel may be configured only with RBs excluding the guard band, or a sub-channel is configured including the guard band, but the availability of the sub-channel overlapping the guard band may vary depending on whether one or multiple RB sets are transmitted.

For example, rules related to guard band usage may be proposed.

For example, whether sub-channelization is required within the guard band may be configured.

For example, whether sub-channelization is performed only within an RB set may be configured.

For example, only RB(s) within the guard band corresponding to the interlace index scheduled/selected based on sensing may be used within an RB set.

For example, separate sensing operation may not be performed for RB(s) within the guard band.

For example, if sub-channelization is performed for RB(s) within the guard band, it may be different from a sub-channel size within an RB set.

For example, rules related to TX-RX switching gap may be proposed.

For example, a method for reducing one symbol time gap between SL TX and SL TX or SL TX and SL RX may be proposed.

For example, sub-symbol extension may be applied before a SL TX starting symbol.

For example, when an overlap occurs between SL TX and UL TX, only the overlapping (sub-)symbols may be partially dropped to prevent excessive gaps between SL TX and UL TX.

For example, alternatives may be proposed to reduce a time gap between a PSSCH ending symbol and a PSFCH starting symbol within a slot, as well as the existing form of PSFCH resource configuration.

For example, the size of the time gap itself may be 16usec and 25usec according to the NR-U specification, and the relationship with a symbol duration needs to be considered according to 15/30/60 kHz SCS. For example, in order to provide the time gap, CP extension may be performed for a PSFCH. For example, in order to provide the time gap, last symbol extension may be performed for a PSSCH.

For example, if a SL structure in which multiple SL UEs simultaneously transmit PSFCH at a semi-static location is considered, the PSFCH may always start at a symbol boundary as before, and PSSCH preceding the PSFCH may be transmitted in an extended manner, and COT information may be transmitted through SCI, and a SL UE that has received the COT information may perform appropriate LBT.

For example, the above method may be limited to a case of COT sharing.

For example, a form in which the location of LBT duration common to SL UEs (or common to COT sharing UEs) is configured before the PSFCH starting symbol may be considered. For example, this is intended to alleviate the issue of LBT failure related to PSFCH transmission caused by extended symbol(s).

For example, rules related to a PSCCH and PSSCH structure may be proposed.

For example, whether an FDM/TDM format between existing PSCCH REs and PSSCH REs is reused may be configured.

For example, in the case of NR-U, when a base station performs broadcast channel (e.g., SSB) transmission, etc., how to apply/operate the interlace was discussed, but it was not finally introduced for DL.

For example, whether it is necessary to keep FDM permission conditions between existing PSCCH REs and PSSCH DMRS REs may be configured.

For example, rules related to a PSFCH structure may be proposed.

For example, a SL channel format that can transmit information similar to CG-DFI may be introduced. For example, it may be SCI ONLY or PSCCH/PSSCH or PUCCH format 1.

For example, in the case of LBT failure, a form that uses the existing PSFCH format but increases the number of symbols may be configured.

For example, when applying an interlace structure, the number of symbols related to the existing PSFCH format may be increased in the time domain (e.g., T-OCC can be applied to the remaining PSFCH symbols except for an AGC symbol), thereby alleviating the problem of reduced multiplexing (MUX) capacity.

For example, the pre-configured number (e.g., 2) of PSFCH symbols may be grouped, and a TX-RX switching gap, an LBT duration, etc. may be defined between the grouped PSFCH symbols.

For example, in the case of a large payload format, a transmission format may be a UE group common reception structure (e.g., when multiple TX UEs transmit data to one RX UE).

For example, in the case of the existing NR-U, a PDCCH/PDSCH RB set and a PUCCH RB set may be different (e.g., a PUCCH resource indication indicates an RB set).

For example, for a SL-U UE, a PSCCH/PSSCH RB set and a PSFCH RB set may always be the same. For example, for a SL-U UE, a PSCCH/PSSCH RB set and a PSFCH RB set may be different.

For example, implicit linkage may be defined between PSSCH resources and PSFCH resources within the same RB set.

For example, SL SSB (SPSS + SSSS + PSBCH) structure-related rules may be proposed.

For example, it is necessary to review whether there is an issue in applying the interlace structure with RB granularity itself.

For example, a method may be proposed to fit SL SSB of 11 RB to the interlace structure of 10 RB (e.g., 15 kHz SCS).

For example, whether to allow FDM with (DUMMY) data may be configured.

For example, a network may ensure that there is an interlace with 11 RBs.

For example, if a PSBCH mapping resource domain is increased along the frequency domain to achieve the target coverage of the PSBCH with the smaller number of symbols (e.g., coding rate gain), the remaining symbols within a SL slot may be defined for other purposes, or PSBCH information may be repeatedly transmitted.

For example, a form that increases a sequence length, such as NR-U PRACH, may be considered.

For example, it may be suggested how to define or position guard RE(s).

For example, if there are multiple RB sets, it may be configured whether SL SSB transmission/reception candidate resources are defined only within one RB set. For example, if there are multiple RB sets, SL SSB transmission/reception candidate resources may be configured only within one RB set. For example, if there are multiple RB sets, SL SSB transmission/reception candidate resources may be configured across multiple RB sets.

For example, if FDM is allowed between SL SSB TX and other SL channel TX, a check for power split/coverage imbalance between them may be required. Also, it may be proposed how a TX UE can determine that a target RX UE does not perform SL SSB transmission on SL SSB resources.

For example, a TBS calculation method may be proposed.

For example, a TBS calculation method may be proposed when using RB(s) in the guard band.

For example, it may be configured whether to calculate TBS considering the number of RBs in the guard band or not. For example, TBS may be derived by considering only the number of RBs within an RB set.

For example, if there is an orphan RB within an RB set that does not match a sub-channel size, a TBS calculation method may be proposed.

For example, using the orphan RB, the orphan RB may not be considered in a TBS calculation.

For example, the need for revisions to TRIV and FRIV may be suggested.

For example, whether to reuse a PUSCH scheduling form (RB set + interlace index) of NR-U may be configured.

For example, SL power control related rules may be proposed.

For example, whether to derive DL PL based on the detection of a non-PLMN cell in an unlicensed band may be configured.

For example, whether to consider/be possible SL communication (e.g., including COT sharing) between UEs of different PLMNs on an unlicensed band may be configured. For example, whether such a form is allowed in the existing SL operation may be configured.

For example, PLMN information may be included in non-relay discovery signaling related to SL communication. If PLMN information is included in non-relay discovery signaling related to SL communication, it may be used for session establishment.

For example, an entity providing SL configuration(s) used for performing SL communication may be configured.

For example, it may be configured whether a UE performs SL communication only with SL configuration(s) provided by its own PLMN-related base station.

For example, rules related to SL CSI reporting may be proposed.

For example, in the case of SL, SL-RS transmission resources may be limited to the scheduled domain of PSSCH, and only aperiodic CSI reporting operation may be supported.

For example, rules related to SL RSRP measurement reporting may be proposed.

For example, rules related to SL synchronization procedure may be proposed.

For example, multi-channel access related issues may be proposed.

For example, a scenario in which multiple PSFCHs are transmitted simultaneously on multiple RB sets needs to be considered. For example, a case where PSFCH simultaneous transmission with different characteristics is required may occur even within an RB set. In this case, a method of handling type 1 LBT based PSFCH TX may be considered. For example, whether multi-channel access is applied may be configured.

For example, simultaneous transmission of type 1 LBT based PSFCH TX(s) and type 2 LBT based PSFCH TX(s) may be considered.

For example, it may be configured whether DL multi-channel access procedure is applied only for type 1 LBT based PSFCH TX(s).

For example, the possibility that CAPC values are different for each PSFCH TX may be considered.

For example, in the case of multi PSFCH TX(s), the lowest CAPC or the highest CAPC may be applied. For example, especially in a situation where each PSFCH is transmitted to a different UE, the lowest CAPC or the highest CAPC may be applied for multi PSFCH TX(s).

For example, UL multi-channel access in NR-U may be reused.

For example, in the case of NR-U, if PUCCH transmissions of different LBT types overlap, the last indicated LBT type may be applied.

For example, when transmitting multi-bit PSFCH to the same UE, the last criterion may be applied.

For example, there may be issues due to coexistence of an LAA cell and an NR-U cell on the U-band.

For example, when an NR SL-U UE selects an LAA cell as its synchronization reference source, a method of expressing LTE TDD U/D configuration (e.g., special SF) through NR PSBCH may be required.

For example, a method of supporting SL operation under a type 3 form of an LAA cell may be proposed. For example, whether to perform SL operation by considering ALL FELXIBLE form may be configured.

For example, there may be issues related to multi-slot scheduling.

For example, in the case of SL sensing operation, a method may be proposed to derive idle candidate resources consisting of N SL resources that are consecutive (or spaced less than or equal to 16 microseconds) on the time domain.

For example, a maximum SL RSRP value measured on N SL resources may be less than or equal to a threshold.

For example, if different HARQ process-related data can be transmitted for each N SL resource, such as in NR-U, a method of determining the associated PUCCH time line/resource in mode 1 may need to be changed. For example, this may be a situation where the locations of PSFCH resources associated with the N SL resources are not the same.

For example, in NR-U, in the case of multi-slot scheduling, it may be configured whether some of the N are available for initial transmission and retransmission(s) of the same HARQ process ID.

For example, in the case of NR UL, the number of HARQ processes may be fixed to 16.

For example, the maximum number of available SL HARQ processes may be configured per multi-slot scheduling grant.

For example, an unused bit may be represented as ACK or new status.

For example, a feedback payload may be specified as bits of the maximum number of available SL HARQ processes.

For example, ACK/NACK may be stacked in transmission order.

For example, ACK/NACK may be stacked in ascending/descending order of HARQ process ID.

For example, a method of indicating SL CSI reporting request may be proposed.

For example, if SL CSI reporting requests are allowed through SCI on multiple SL resources among N, whether an RX UE starts a latency budget timer based on the location of the last received request may be configured. For example, if SL CSI reporting requests are allowed through SCI on multiple SL resources among N, an RX UE may start a latency budget timer based on the location of the last received request.

For example, a method of handling a guard band may be proposed when an interlaced PRB structure is not configured.

For example, it may be used as an exception only when multiple RB sets are used, without applying sub-channelization.

For example, in the case of SL-U, the need for reuse of RA type 0/1 of NR-U UL may be low.

For example, PSCCH and/or 2ND SCI mapping resources may be proposed.

For example, PSCCH and/or 2ND SCI mapping resources may be limited to resources within one RB set.

For example, considering the possibility that multiple SL resources indicated by one PSCCH may be located on different RB sets, and the possibility that actual SL transmission is performed only on some RB sets that have succeeded in LBT among SL grant-related resources located on multiple RB sets, especially, if COT sharing information is transmitted through the 1st SCI (and/or the 2nd SCI), the 1st SCI may be transmitted on all of the multiple RB sets.

For example, a form in which a TX UE simultaneously transmits multiple RB sets may also be considered.

For example, there may be resource pool-related issues.

For example, a COT duration may be configured.

For example, a COT may be defined based on absolute time (e.g., ms), such as NR-U.

For example, handling may be required for a case where SL slots belonging to a resource pool do not always exist within a COT.

For example, if SL SSB does not belong to a resource pool, some slots that do not belong to the resource pool within a COT length may be used for SL SSB transmission (e.g., UL transmission may also be considered).

For example, a COT may be defined as a set of SL slots belonging to a resource pool.

For example, the starting time of COT generation may be limited to the time of SL slots belonging to the resource pool, and a maximum COT length that can be configured by MIN {a length of SL slot(s) belonging to a continuous resource pool in the time domain, a maximum COT length based on CAPC} may be determined. Herein, MIN {X, Y} may be a smaller value among X and Y.

For example, a COT may be configured based on logical SL slots.

For example, in the case of NR-U, in the case of single U/D switching, whether a gap of multiple slots is also allowable within a COT may be configured.

For example, multi-slot scheduling may be proposed.

For example, the number of resources related to multi-slot scheduling may be limited by the number of SL slots belonging to a continuous resource pool in the time domain.

For example, there may be issues related to SL SSB transmission.

For example, in order to generate a COT for SL SSB transmission, a CAPC value (e.g., 4) needs to be predefined.

For example, within a COT, whether all SL SSB transmissions within one SLSS period are possible may be configured.

For example, for SL SSB transmission (or for a UE transmitting (and/or receiving) SL SSB), a COT type or shared COT operation may be configured to be performed.

For example, COT sharing may be proposed.

For example, SL SSB-related COT sharing may be proposed. In this case, the following information may be considered.
- Granularity: COT sharing based on synchronization source type, COT sharing by synchronization hop (e.g. direct, indirect, etc.)
- COT sharing information signaling: reserved bit(s) on SCI, PSBCH (including information such as SLSS ID, synchronization source type, synchronization hop, etc.)

For example, SL SSB transmission may be allowed (without any restrictions) in any shared COT.

For example, whether data transmission is allowed in a COT related to SL SSB transmission may be configured.

For example, SL SSB TX may also apply type 2A LBT if it satisfies transmission within 1ms within 20ms duty cycle.

For example, in the case of IC, whether it is short control signaling or not may be configured by a network.

For example, in the case of OOC, it may be considered (DEFAULT) not short control signaling. For example, in the case of OOC, whether it is short control signaling or not may be (pre-)configured.

For example, there may be issues related to SL DRX.

For example, Uu DRX operation in the U-band may be applied to SL-U.

For example, if a separate enhancement is introduced considering the possibility of PDCCH transmission omission based on LBT failure, the enhancement may be applied to SL-U.

For example, there may be issues related to channel access mechanism.

For example, considering the power saving aspect, a channel access mechanism needs to be designed. Therefore, method (A) needs to be considered.

[Method (A)]: A form of performing SL sensing/resource selection (SL grant generation) within a COT after LBT-based COT generation

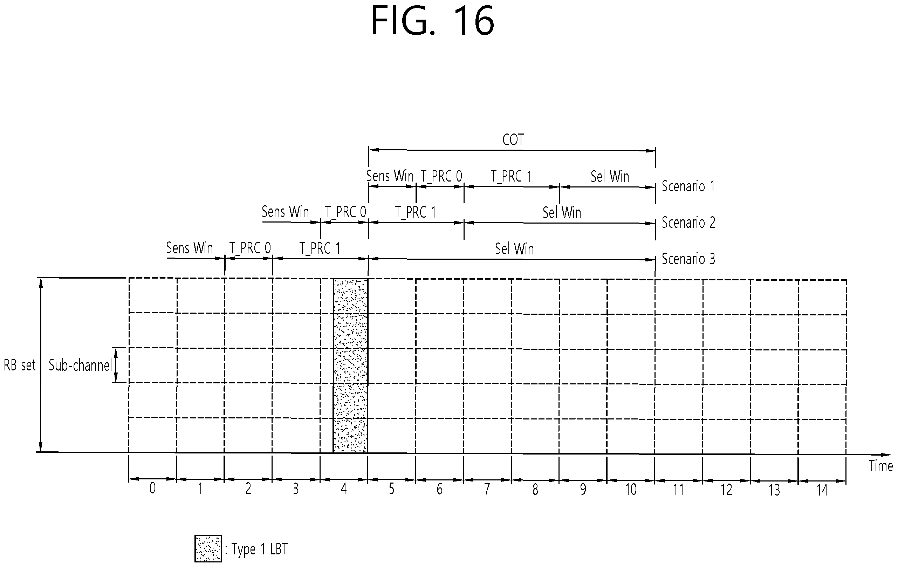

FIG. 16 shows a method for performing SL communication in an unlicensed band, based on an embodiment of the present disclosure. The embodiment of FIG. 16 may be combined with various embodiments of the present disclosure.

Referring to FIG. 16, in the case of scenario 1, a reselected resource or a PSFCH resource (e.g., a situation where a TX UE can determine a PSFCH resource location, a situation where PSFCH resources are repeated) may be located in a sensing window or a T_PROC0 domain. For example, in the case of the resource to be reselected, information on whether to reselect may be informed in advance by previous SCI.

For example, SL sensing used for SL grant generation may be performed.

For example, in the case of the existing NR-U, in the case of a COT initiated by a base station, only slots where the base station actually performed DL TX and slots where the base station scheduled UL TX to a UE may be reflected in COT decrement. That is, a gap between them may not be reflected in the COT decrement.

For example, in the case of a COT initiated by a UE, the above principle may not be applied. That is, if there is a gap between scheduled UL resources, slots related to the gap may also be reflected in the COT decrement.

EXAMPLE 1) If a UE that succeeds in LBT in slot 4 performs COT sharing, a UE that receives it may perform transmission based on short LBT within the shared COT.

EXAMPLE 2) Even if LBT fails in slot 4, a UE may additionally perform LBT on the subsequent slot(s), and the UE may generate a COT using the result.

For example, in the case of scenario 1/2, referring to FIG. 16, according to the COT definition, the starting time of the COT may be shifted (e.g., SELF-DEFERRAL) based on the time when actual transmission starts. For example, it may not be easy to utilize the resource (re)selection effect based on SL sensing. For example, transmission resource selection on the first SLOT within the COT cannot be performed. For example, a solution may be proposed that performs random resource selection in the front area within the COT and performs SL sensing-based resource selection in the back area. For example, it can be utilized within the shared COT.

For example, in the case of scenario 2, a UE that has performed COT sharing may perform resource selection/transmission on slot 5/6.

For example, in the case of scenario 3, there may be a complexity of repeatedly performing SL sensing-based resource selection procedures assuming LBT success. For example, within a COT, a method that allows transmission resource selection on the first slot and a method that allows resource selection based on consecutive slots may still be needed.

For example, in the case of method (A), a direction of preferential use in the COT sharing scenario may be considered.

For example, a direction that reduces the SL processing time may be considered.

For example, only a gap between the starting time of a selection window (or the first selected resource time or the time when resource selection is triggered) and the LBT time may be defined, and satisfaction of the remaining processing time may be UE implementation.

For example, if another UE reserves/selects the forward resources on a COT after LBT success, it may be configured whether a UE can use them.

For example, a mechanism for sharing resources in a form of FDM within a COT may be proposed.

For example, a UE may expect that another UE will form a COT on resources it has reserved, and may exclude it. For example, this may be a situation where another UE has initiated operation based on method (B).

For example, a base station may share a COT initiated by the base station with multiple UEs, and the UEs may share FDMed resources with each other.

### [Method (B)]: A form of determining whether the corresponding resource is actually used based on LBT after performing SL sensing/resource selection (generating SL grant)

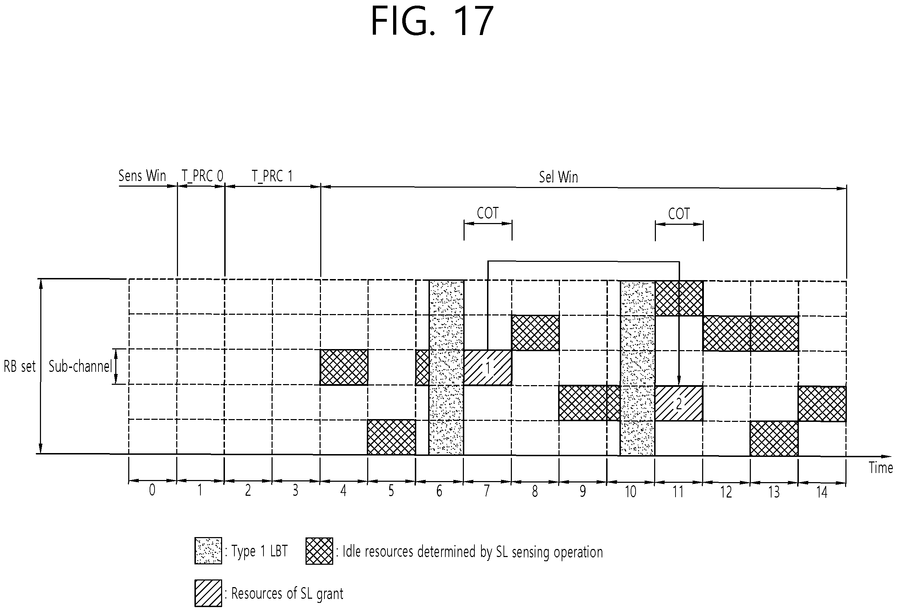

FIG. 17 shows a method for performing SL communication in an unlicensed band, based on an embodiment of the present disclosure. The embodiment of FIG. 17 may be combined with various embodiments of the present disclosure.

For example, when feedback for data on resource 1 is transmitted through a PSFCH on resource 2, a TX UE may be made to select a resource for data transmission on resource 2. Through this, there may be a one-shot LBT gain of the PSFCH.

For example, in the case of unicast, a PSFCH may be piggybacked on data on resource 2. For example, it may be in a form of UCI, a MAC CE.

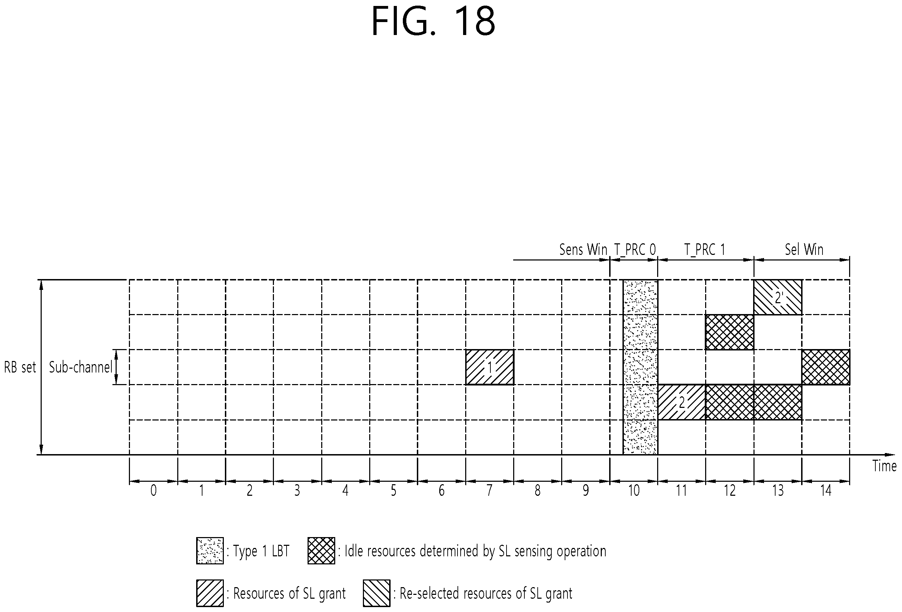

FIG. 18 shows a method for performing SL communication in an unlicensed band, based on an embodiment of the present disclosure. The embodiment of FIG. 18 may be combined with various embodiments of the present disclosure.

For example, a resource reselection condition related to a SL grant may be proposed. For example, the resource reselection condition related to the SL grant may include LBT failure. For example, T_PROC1 may end in slot 10, and considering the possibility of reselection for resource 2 based on LBT failure, a UE may pre-select resource 2'. In fact, if this event occurs, the UE may utilize resource 2'. For example, the UE may add additional resource 2'. Alternatively, if the above event does not occur, the UE may release the additional resource 2'. For example, signaling for an addition indication or a release indication may be defined.

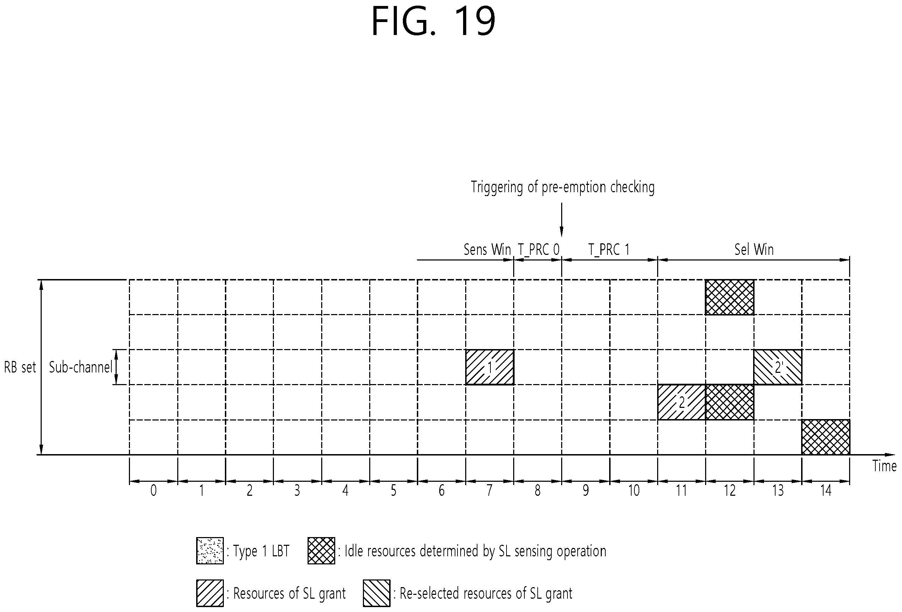

FIG. 19 shows a method for performing SL communication in an unlicensed band, based on an embodiment of the present disclosure. The embodiment of FIG. 19 may be combined with various embodiments of the present disclosure.

The embodiment of FIG. 19 shows a case where pre-emption or re-evaluation is triggered.

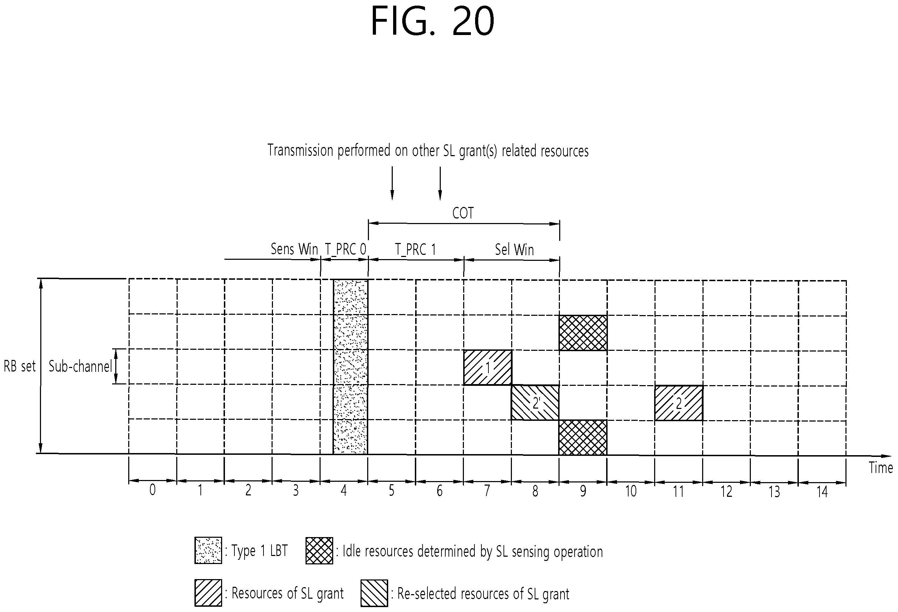

FIG. 20 shows a method for performing SL communication in an unlicensed band, based on an embodiment of the present disclosure. The embodiment of FIG. 20 may be combined with various embodiments of the present disclosure.

Referring to FIG. 20, a UE may relocate SL grant-related resources to the location of (contiguous) slots within a newly formed COT. For example, a synchronization may be configured that should be separated in the time domain when selecting initial SL grant-related resources. For example, when reserving periodic resources for different MAC PDU transmissions, a synchronization that should be separated in the time domain may be configured.

For example, a method for implicitly determining released resources may be proposed.

For example, if a gap between selected resources is not large, there is a possibility that the subsequent resource cannot be used due to LBT failure. Considering this, a method for reselecting a resource to have a certain gap or more may be required.

For example, rather than relocating existing generated SL grant resources (e.g., conditional-based operation), a method for making up other SL grant-related resources, or a method for making up by generating additional retransmission-related SL grants may be proposed.

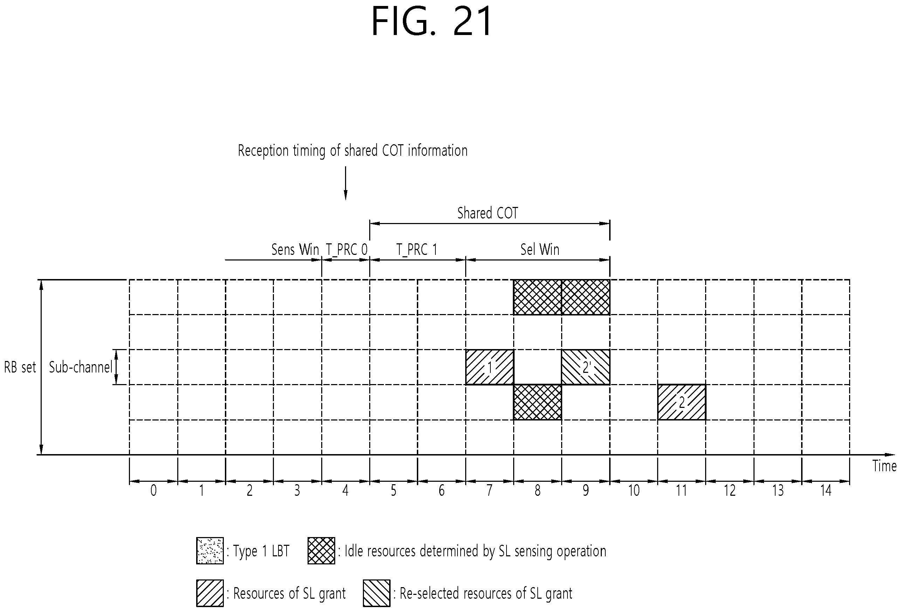

FIG. 21 shows a method for performing SL communication in an unlicensed band, based on an embodiment of the present disclosure. The embodiment of FIG. 21 may be combined with various embodiments of the present disclosure.

Referring to FIG. 21, a UE may move SL grant-related resource(s) into a shared COT. For example, even if the UE reselects resource 2 as resource 2', the UE may also consider reusing the existing resource 2. For example, if IDLE resources in the location of consecutive slots are found as a result of performing additional SL sensing, the UE may reallocate the SL grant-related resource(s) to this location.

For example, when reselecting resource 2, resource 2 may move together with a PSFCH based on the timeline with the PSFCH. Alternatively, if resource 2 does not move together with the PSFCH resource, HARQ feedback may be disabled. If the moved resource does not satisfy the HARQ timeline, HARQ feedback may be disabled.

For example, if a UE may determine that there is no actual transmission on a PSFCH resource associated with a PSSCH (e.g., situation occupied by WI-FI), the UE may use the corresponding PSFCH resource as a data resource.

For example, in all the examples discussed in method (B), resource 1 and resource 2 may be related to different SL grants or may be related to different MAC PDUs.

For example, when selecting resources related to different MAC PDUs or resources related to different SL grants, it may be a point to prioritize adjacent slots of existing SL grant related resources.

### [Method (A) + Method (B)]:

For example, the UE may operate based on method (B) by default, but method (A) may be applied when reselecting resources.

For example, method (A) may be useful when sharing a COT.

For example, whether to allow hybrid mode per resource pool or per BWP may be configured.

### [Method (C)]:

After LBT is successful, resources on consecutive slots are selected, but in the frequency domain, they are selected randomly.

For example, when operating based on a shared COT, a resource selection restriction on consecutive slots may not be applied.

### [Method (D)]:

A form in which additional selection of required resources is triggered based on LBT failure without completing selection of all related resources at the time of SL grant generation

For example, FBE may be proposed.

For example, it may be configured whether base station-based FBE makes sense (e.g., in particular, in terms of MODE 2 SL-U UEs).

For example, it may be configured whether there is a need to randomize FBE boundaries (e.g., in particular, in the case of OOC).

For example, L2 DST ID-based FBE may be configured.

For example, in the case of unicast, FBE may be determined between UEs through PC5 RRC.

For example, operation in mode 1 may be proposed.

For example, an LBT type indication may be proposed in mode 1.

For example, in the case of SL resources with a large time gap on the time domain, it may be configured whether an LBT type indication is possible.

For example, extension related to propagation delay in mode 1 may be considered.

For example, when generating a SL grant, it may be configured whether to additionally use an LBT result to apply resource exclusion.

For example, it may be configured whether special handling is required for a collision between UL and SL between inter-UEs.

For example, when LBT succeeds for multiple RB sets, a UE may select SL grant-related resources limited to one RB set. For example, when LBT succeeds for multiple RB sets, a UE may select SL grant-related resources in a form of TDM or FDM on multiple RB sets.

For example, if a collision occurs between UL TX and SL TX, extension of the subsequent SL TX may be required to perform the subsequent SL TX based on one-shot LBT.

For example, if configured maximum TX power values between UL TX and SL TX are different, whether one-shot LBT is impossible between adjacent UL/SL TX may be configured. For example, if configured maximum TX power values between UL TX and SL TX are different, whether to adjust the transmit power of a specific TX may be configured.

For example, the location of an LBT duration between SL-U UEs may be defined. For example, for the purpose of alleviating a collision between SL-UE UEs based on LBT, the location of the LBT duration between SL-U UEs may be defined.

For example, a UE common location may be generated, but depending on a priority, it may be configured whether the length of CP extension is to be different. For example, in the case of S-SSB and/or PSFCH, a UE common location for CPE extension may be generated, but in the case of PSCCH and/or PSSCH, the length of CP extension may be determined/configured differently depending on a priority.

For example, a resource/channel structure considering PSD and OCB requirements may be proposed.

For example, in the case of a resource pool, a resource pool may be a unit larger than a sub-channel, and for example, one resource pool may consist of one or more sub-channels. For example, it may be configured whether a frequency size of a single resource pool is equal to an LBT-BW (e.g., 20 MHz). For example, it may be configured whether to operate multiple resource pool frequencies within one LBT-BW. For example, it may be configured whether to consider a resource pool structure that spans multiple LBT-BWs. For example, in this case, operation may be configured only for successful LBT for some LBT-BWs.

For example, in the case of a sub-channel, a sub-channel size in existing SL may be 10/12/15/20/25/50/75/100 RBs. For example, in SL-U, it may be configured whether to change the sub-channel size to 1/2/... RB-interlaces. For example, if a frequency of a resource pool or single SL TX is limited to a single LBT-BW, it may be configured whether to define a maximum sub-channel size differently depending on whether SCS is 15 kHz or 30 kHz. For example, in NR-U, in the case of 15 kHz SCS, it may be 100 RBs per 20 MHz, and in the case of 30 kHz SCS, it may be 50 RBs per 20 MHz. Alternatively, for example, to maintain the maximum sub-channel size with 100 RBs, a sub-channel may be confined in one LBT-BW (20 MHz) for 15 kHz, and in two LBT-BWs (40 MHz) for 30 kHz. For example, from the perspective of FDRA, a configuration/instruction for the combination of a sub-channel and a resource pool may be considered in a form of configuring/instructing the combination of an RB-interlace index (with X-bit) and an LBT-BW index (with Y-bit) similar to the NR-U structure. For example, when changing the SL resource unit/structure such as sub-channel to RB-interlace as above, it is necessary to review whether there is a problem with the SL sensing operation of such RB-interlace unit.

For example, in the case of PSFCH, it may be necessary to change to RB-interlace structure by default. However, consideration of the capacity reduction (compared to the existing SL) due to this may also be required. For example, whether to support up to TDM by adding X symbols may be configured. For example, X may be 1 or 2 (with an LBT gap). For example, whether to apply TD-OCC by adding Y symbols may be configured. For example, Y may be 1. In this case, when indexing PSFCH RB subsets and indexing resources within a PSFCH resource set, it is necessary to also consider the symbol/OCC domain. For example, whether a sub-RB interlace or a RE-level interlace (IFDMA) structure is required may be configured. For example, when selecting N PSFCH transmissions, whether to consider not only maximum power but also PSD limitation may be configured. For example, when transmitting N PSFCHs through multiple RB interlaces with FDM, whether to consider PAPR/CM performance in addition to maximum power and PSD limitation may be configured. For example, good interlace/CS combinations that are FDM capable may be considered.

For example, in the case of PSCCH/PSSCH/S-SSB, if only one resource pool is considered per LBT-BW frequency, whether a change is unnecessary may be configured. For example, if FDM is considered between multiple resource pools within an LBT-BW, whether to change to RB-interlace structure may be configured. For example, in the case of S-SSB, since SL cannot guarantee simultaneous transmission of an SSB and other FDM signals (e.g., PSXCH) like DL from a base station, OCB requirements may not be satisfied, and if PSD limitation is reached (because it is UE transmission), TX power may be insufficient, causing problems in a SL coverage. Therefore, whether to change to RB-interlace structure may be configured. For example, it may be configured whether to configure an S-SSB with a wide bandwidth of 20 MHz to reduce a symbol duration, thereby providing two S-SSB transmission opportunities within one SL slot.

For example, a SL slot structure considering LBT and an LBT configuration considering SL operation may be proposed.

For example, in the case of slot format, it may be configured whether a gap required for LBT operation including back-off is sufficient for one symbol as currently defined for Tx-Rx switching. For example, it may be configured whether to increase the number of symbols based on the back-off size/statistics. However, it may be efficient to have some degree of gap alignment between UEs. For example, if LBT fails just before SL resource transmission, it may be configured whether to discard all or part of AGC symbol signals and retry LBT. For example, it may be configured whether to consider minimizing/preventing a gap required for LBT when configuring SL-TDD-Config.

For example, in the case of LBT parameters, when operating in FBE mode, an FFP period/offset per UE/pool may be configured. For example, it may be configured differently per UE or identically between UEs. For example, it may be configured only for a specific UE, and only COT sharing may be allowed for the remaining UEs. For example, when operating in LBE mode, an LBT/CPE parameter per UE/pool may be configured. For example, it may be configured whether it is possible to indicate LBT parameters for SL through Uu in mode 1. For example, an indication method may also be configured in mode 2. For example, when a source UE indirectly informs whether its own COT initiation has been made by indicating category-2/4 LBT to a target UE through SCI, other UEs receiving it may also distinguish whether the transmission signal of the source UE is within an initiated COT or a shared COT.

For example, for LBT considerations, for S-SSB, it may be configured whether multiple S-SSB slots are configured per period to provide additional LBT opportunities. For example, when reporting SL A/N to a base station, if a TX UE fails to transmit a PSSCH due to LBT failure, operation of the TX UE may be proposed. For example, a COT initiating UE may be limited to a synchronization reference UE, a groupcast TX UE, etc. For example, it may be configured whether to consider a block of a gap (immediately before a resource) required for LBT in resource selection. For example, it may be configured whether to consider LBT failure for the previous resource in resource selection. For example, if a PSFCH slot is configured semi-statically, it may be configured whether to dynamically designate the PSFCH slot timing to encourage transmission within a COT. For example, if this is implicitly implemented, the linkage between PSSCH slots and a PSFCH slot may be determined locally based only on slots within the COT. For example, the above dynamic or local method may be undesirable because of the possibility of mismatch with other UEs outside the COT. For example, considering LBT failure in the U-band, the mapping between PSSCH resources and PSFCH resources may be configured to 1:M instead of 1:1, and the UE may perform transmission using a resource that succeeds in LBT first among the M. For example, if the existing PSFCH structure within a SL slot (without TDM) should be maintained as it is, the current PSSCH slot: PSFCH slot = N:1 structure may be extended to the N:M form.

For example, if a consistent LBT failure occurs for a specific RB set, a UE may always exclude the RB set when selecting resources. Alternatively, for example, if a consistent LBT failure occurs for a specific RB set, a UE may deprioritize the selection of idle resources on the RB set in resource selection. For example, in the case of deprioritizing, the UE may exceptionally use idle resources on the RB set only when the number of resources required for TB transmission in the remaining RB set is insufficient. For example, when the UE obtains idle resources based on sensing, the UE may secure X% candidate resources from the remaining RB set. For example, on the RB set where the problem occurred, the UE may secure/reinforce candidate resources by applying a pre-configured separate percentage.

In an embodiment of the present disclosure, the channel access type and whether/how to indicate may be applied differently to the method for each SL channel. In an embodiment of the present disclosure, the channel access type and whether/how to indicate may be applied differently to the method depending on the type of information included in the SL channel.

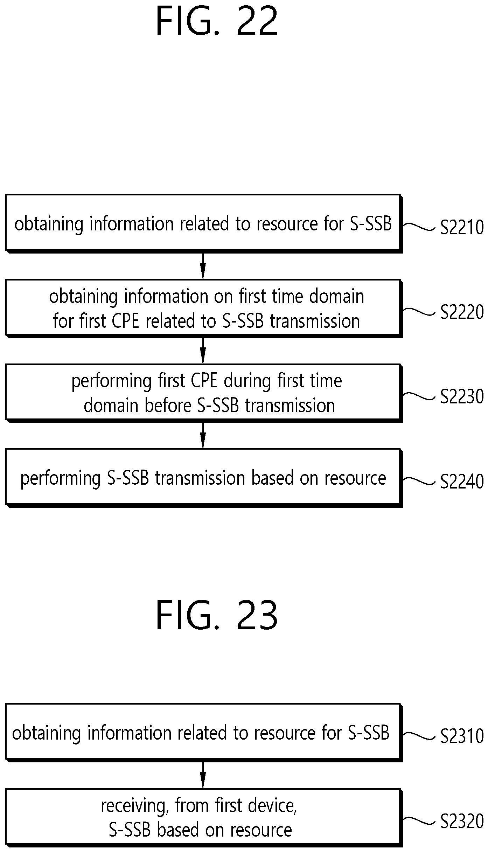

FIG. 22 shows a method for a first device to perform wireless communication, based on an embodiment of the present disclosure. The embodiment of FIG. 22 may be combined with various embodiments of the present disclosure.

Referring to FIG. 22, in step S2210, the first device may obtain information related to a resource for sidelink-synchronization signal block (S-SSB). In step S2220, the first device may obtain information on a first time domain for a first cyclic prefix extension (CPE) related to S-SSB transmission. In step S2230, the first device may perform the first CPE during the first time domain before the S-SSB transmission. In step S2240, the first device may perform the S-SSB transmission based on the resource.

For example, a length of the first time domain may be configured to one value.

Additionally, for example, the first device may obtain information related to a resource set on which a channel access procedure is performed in a shared spectrum. For example, based on a listen before talk (LBT) failure for the resource set, resource reselection may be triggered by the first device. For example, based on an LBT failure for the resource set, a radio link failure (RLF) for a unicast connection may be declared by the first device. For example, based on an LBT failure for the resource set, information related to the LBT failure may be transmitted by the first device to a base station. For example, based on an LBT failure for the resource set, the resource set may be changed to a different resource set from the resource set by the first device.

Additionally, for example, the first device may obtain information on a second time domain for a second CPE related to physical sidelink feedback channel (PSFCH) transmission. Additionally, for example, the first device may receive a physical sidelink shared channel (PSSCH). Additionally, for example, the first device may determine a PSFCH resource for PSFCH transmission in response to receiving the PSSCH. Additionally, for example, the first device may perform the second CPE during the second time domain before the PSFCH transmission. Additionally, for example, the first device may perform the PSFCH transmission based on the PSFCH resource. For example, a length of the second time domain may be configured to one value.

For example, a channel access priority class (CAPC) value used to generate a channel occupancy time (COT) for the S-SSB transmission may be pre-defined.

Additionally, for example, the first device may perform a third CPE during a third time domain for the third CPE. For example, a length of the third time domain may be determined based on a priority.

For example, the S-SSB transmission may include a plurality of S-SSBs that are repeatedly transmitted in a frequency domain.

Additionally, for example, the first device may obtain information representing a first number of S-SSB transmissions within one S-SSB transmission period in a shared spectrum. For example, the first number may be greater than a second number of S-SSB transmissions configured in a licensed spectrum. For example, the first device may be allowed to perform the second number of S-SSB transmissions within the one S-SSB transmission period based on listen before talk (LBT). For example, the first device may not be allowed to perform S-SSB transmissions exceeding the second number within the one S-SSB transmission period based on the LBT.

The proposed method can be applied to devices based on various embodiments of the present disclosure. First, the processor 102 of the first device 100 may obtain information related to a resource for sidelink-synchronization signal block (S-SSB). In addition, the processor 102 of the first device 100 may obtain information on a first time domain for a first cyclic prefix extension (CPE) related to S-SSB transmission. In addition, the processor 102 of the first device 100 may control the transceiver 106 to perform the first CPE during the first time domain before the S-SSB transmission. In addition, the processor 102 of the first device 100 may control the transceiver 106 to perform the S-SSB transmission based on the resource.

Based on an embodiment of the present disclosure, a first device adapted to perform wireless communication may be provided. For example, the first device may comprise: at least one transceiver; at least one processor; and at least one memory connected to the at least one processor and storing instructions. For example, the instructions, based on being executed by the at least one processor, may cause the first device to perform operations comprising: obtaining information related to a resource for sidelink-synchronization signal block (S-SSB); obtaining information on a first time domain for a first cyclic prefix extension (CPE) related to S-SSB transmission; performing the first CPE during the first time domain before the S-SSB transmission; and performing the S-SSB transmission based on the resource.

Based on an embodiment of the present disclosure, a processing device adapted to control a first device may be provided. For example, the processing device may comprise: at least one processor; and at least one memory connected to the at least one processor and storing instructions. For example, the instructions, based on being executed by the at least one processor, may cause the first device to perform operations comprising: obtaining information related to a resource for sidelink-synchronization signal block (S-SSB); obtaining information on a first time domain for a first cyclic prefix extension (CPE) related to S-SSB transmission; performing the first CPE during the first time domain before the S-SSB transmission; and performing the S-SSB transmission based on the resource.

Based on an embodiment of the present disclosure, a non-transitory computer-readable storage medium storing instructions may be provided. For example, the instructions, when executed, may cause a first device to perform operations comprising: obtaining information related to a resource for sidelink-synchronization signal block (S-SSB); obtaining information on a first time domain for a first cyclic prefix extension (CPE) related to S-SSB transmission; performing the first CPE during the first time domain before the S-SSB transmission; and performing the S-SSB transmission based on the resource.

FIG. 23 shows a method for a second device to perform wireless communication, based on an embodiment of the present disclosure. The embodiment of FIG. 23 may be combined with various embodiments of the present disclosure.

Referring to FIG. 23, in step S2310, the second device may obtain information related to a resource for sidelink-synchronization signal block (S-SSB). In step S2320, the second device may receive, from a first device, the S-SSB based on the resource. For example, before the resource, during a first time domain for a first cyclic prefix extension (CPE) related to S-SSB transmission, the first CPE may be performed by the first device.

The proposed method can be applied to devices based on various embodiments of the present disclosure. First, the processor 202 of the second device 200 may obtain information related to a resource for sidelink-synchronization signal block (S-SSB). In addition, the processor 202 of the second device 200 may control transceiver 206 to receive, from a first device, the S-SSB based on the resource. For example, before the resource, during a first time domain for a first cyclic prefix extension (CPE) related to S-SSB transmission, the first CPE may be performed by the first device.

Based on an embodiment of the present disclosure, a second device adapted to perform wireless communication may be provided. For example, the second device may comprise: at least one transceiver; at least one processor; and at least one memory connected to the at least one processor and storing instructions. For example, the instructions, based on being executed by the at least one processor, may cause the second device to perform operations comprising: obtaining information related to a resource for sidelink-synchronization signal block (S-SSB); and receiving, from a first device, the S-SSB based on the resource. For example, before the resource, during a first time domain for a first cyclic prefix extension (CPE) related to S-SSB transmission, the first CPE may be performed by the first device.

Based on an embodiment of the present disclosure, a processing device adapted to control a second device may be provided. For example, the processing device may comprise: at least one processor; and at least one memory connected to the at least one processor and storing instructions. For example, the instructions, based on being executed by the at least one processor, may cause the second device to perform operations comprising: obtaining information related to a resource for sidelink-synchronization signal block (S-SSB); and receiving, from a first device, the S-SSB based on the resource. For example, before the resource, during a first time domain for a first cyclic prefix extension (CPE) related to S-SSB transmission, the first CPE may be performed by the first device.

Based on an embodiment of the present disclosure, a non-transitory computer-readable storage medium storing instructions may be provided. For example, the instructions, when executed, may cause a second device to perform operations comprising: obtaining information related to a resource for sidelink-synchronization signal block (S-SSB); and receiving, from a first device, the S-SSB based on the resource. For example, before the resource, during a first time domain for a first cyclic prefix extension (CPE) related to S-SSB transmission, the first CPE may be performed by the first device.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

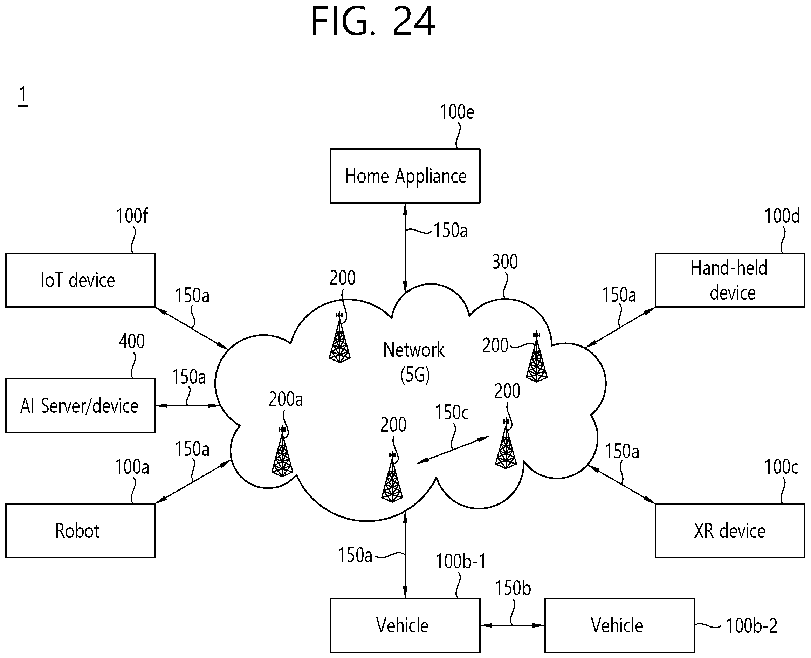

FIG. 24 shows a communication system 1, based on an embodiment of the present disclosure. The embodiment of FIG. 24 may be combined with various embodiments of the present disclosure.

Referring to FIG. 24, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

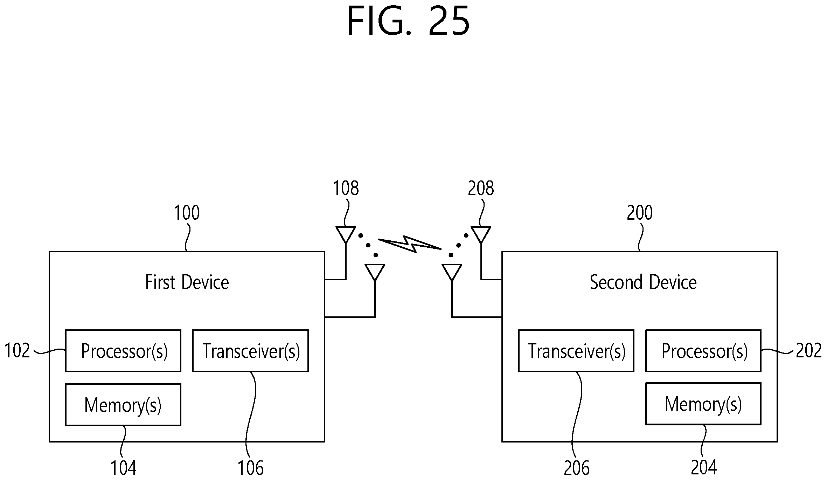

FIG. 25 shows wireless devices, based on an embodiment of the present disclosure. The embodiment of FIG. 25 may be combined with various embodiments of the present disclosure.

Referring to FIG. 25, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 24.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

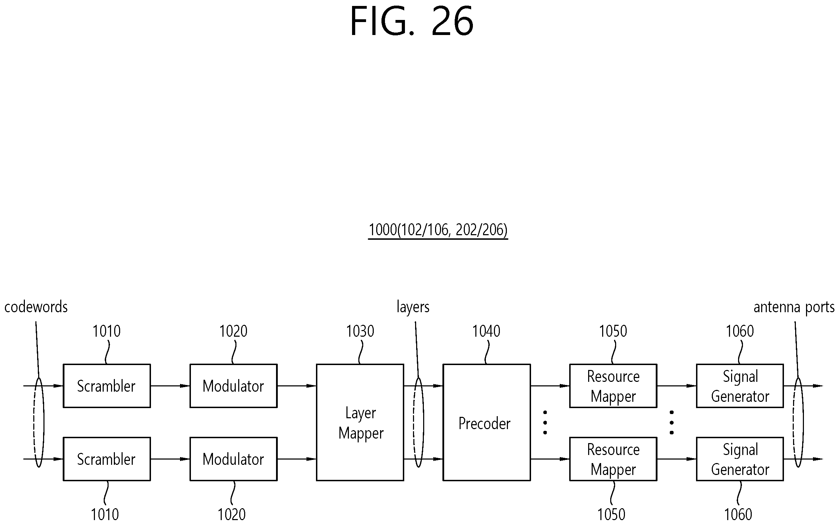

FIG. 26 shows a signal process circuit for a transmission signal, based on an embodiment of the present disclosure. The embodiment of FIG. 26 may be combined with various embodiments of the present disclosure.

Referring to FIG. 26, a signal processing circuit 1000 may include scramblers 1010, modulators 1020, a layer mapper 1030, a precoder 1040, resource mappers 1050, and signal generators 1060. An operation/function of FIG. 26 may be performed, without being limited to, the processors 102 and 202 and/or the transceivers 106 and 206 of FIG. 25. Hardware elements of FIG. 26 may be implemented by the processors 102 and 202 and/or the transceivers 106 and 206 of FIG. 25. For example, blocks 1010 to 1060 may be implemented by the processors 102 and 202 of FIG. 25. Alternatively, the blocks 1010 to 1050 may be implemented by the processors 102 and 202 of FIG. 25 and the block 1060 may be implemented by the transceivers 106 and 206 of FIG. 25.

Codewords may be converted into radio signals via the signal processing circuit 1000 of FIG. 26. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 26. For example, the wireless devices (e.g., 100 and 200 of FIG. 25) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

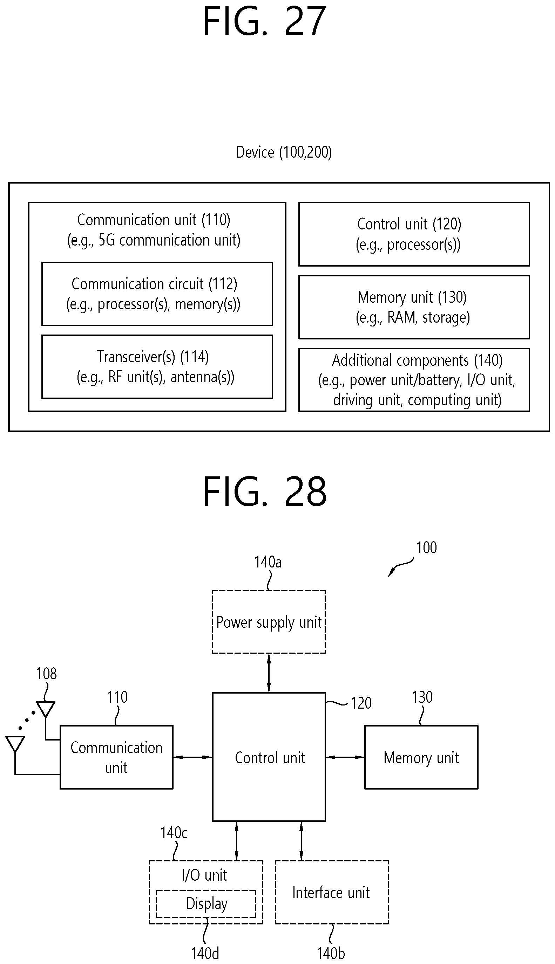

FIG. 27 shows another example of a wireless device, based on an embodiment of the present disclosure. The wireless device may be implemented in various forms according to a use-case/service (refer to FIG. 24). The embodiment of FIG. 27 may be combined with various embodiments of the present disclosure.

Referring to FIG. 27, wireless devices 100 and 200 may correspond to the wireless devices 100 and 200 of FIG. 25 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 25. For example, the transceiver(s) 114 may include the one or more transceivers 106 and 206 and/or the one or more antennas 108 and 208 of FIG. 25. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 24), the vehicles (100b-1 and 100b-2 of FIG. 24), the XR device (100c of FIG. 24), the hand-held device (100d of FIG. 24), the home appliance (100e of FIG. 24), the IoT device (100f of FIG. 24), a digital broadcast terminal, a hologram device, a public safety device, an MTC device, a medicine device, a fintech device (or a finance device), a security device, a climate/environment device, the AI server/device (400 of FIG. 24), the BSs (200 of FIG. 24), a network node, etc. The wireless device may be used in a mobile or fixed place according to a use-example/service.

In FIG. 27, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 27 will be described in detail with reference to the drawings.

FIG. 28 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 28 may be combined with various embodiments of the present disclosure.

Referring to FIG. 28, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 27, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

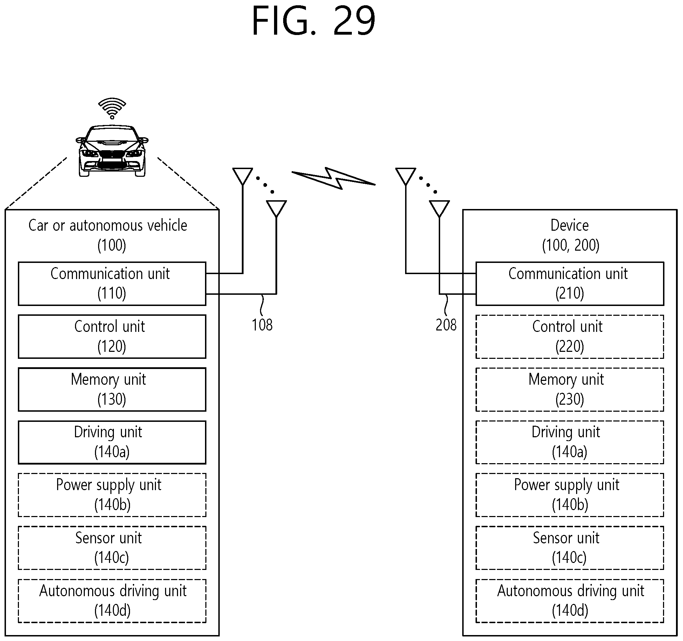

FIG. 29 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 29 may be combined with various embodiments of the present disclosure.

Referring to FIG. 29, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 27, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
obtaining information related to a resource for sidelink-synchronization signal block (S-SSB);
obtaining information on a first time domain for a first cyclic prefix extension (CPE) related to S-SSB transmission;
performing the first CPE during the first time domain before the S-SSB transmission; and
performing the S-SSB transmission based on the resource.

2. The method of claim 1, wherein a length of the first time domain is configured to one value.

3. The method of claim 1, further comprising:
obtaining information related to a resource set on which a channel access procedure is performed in a shared spectrum.

4. The method of claim 3, wherein, based on a listen before talk (LBT) failure for the resource set, resource reselection is triggered by the first device.

5. The method of claim 3, wherein, based on an LBT failure for the resource set, a radio link failure (RLF) for a unicast connection is declared by the first device.

6. The method of claim 3, wherein, based on an LBT failure for the resource set, information related to the LBT failure is transmitted by the first device to a base station.

7. The method of claim 3, wherein, based on an LBT failure for the resource set, the resource set is changed to a different resource set from the resource set by the first device.

8. The method of claim 1, further comprising:
obtaining information on a second time domain for a second CPE related to physical sidelink feedback channel (PSFCH) transmission;
receiving a physical sidelink shared channel (PSSCH);
determining a PSFCH resource for PSFCH transmission in response to receiving the PSSCH;
performing the second CPE during the second time domain before the PSFCH transmission; and
performing the PSFCH transmission based on the PSFCH resource.

9. The method of claim 8, wherein a length of the second time domain is configured to one value.

10. The method of claim 1, wherein a channel access priority class (CAPC) value used to generate a channel occupancy time (COT) for the S-SSB transmission is pre-defined.

11. The method of claim 1, further comprising:
performing a third CPE during a third time domain for the third CPE,
wherein a length of the third time domain is determined based on a priority.

12. The method of claim 1, wherein the S-SSB transmission includes a plurality of S-SSBs that are repeatedly transmitted in a frequency domain.

13. The method of claim 1, further comprising:
obtaining information representing a first number of S-SSB transmissions within one S-SSB transmission period in a shared spectrum,
wherein the first number is greater than a second number of S-SSB transmissions configured in a licensed spectrum,
wherein the first device is allowed to perform the second number of S-SSB transmissions within the one S-SSB transmission period based on listen before talk (LBT), and
wherein the first device is not allowed to perform S-SSB transmissions exceeding the second number within the one S-SSB transmission period based on the LBT.

14. A first device adapted to perform wireless communication, the first device comprising:
at least one transceiver;
at least one processor; and
at least one memory connected to the at least one processor and storing instructions that, based on being executed by the at least one processor, cause the first device to perform operations comprising:
obtaining information related to a resource for sidelink-synchronization signal block (S-SSB);
obtaining information on a first time domain for a first cyclic prefix extension (CPE) related to S-SSB transmission;
performing the first CPE during the first time domain before the S-SSB transmission; and
performing the S-SSB transmission based on the resource.

15. A processing device adapted to control a first device, the processing device comprising:
at least one processor; and
at least one memory connected to the at least one processor and storing instructions that, based on being executed by the at least one processor, cause the first device to perform operations comprising:
obtaining information related to a resource for sidelink-synchronization signal block (S-SSB);
obtaining information on a first time domain for a first cyclic prefix extension (CPE) related to S-SSB transmission;
performing the first CPE during the first time domain before the S-SSB transmission; and
performing the S-SSB transmission based on the resource.

16. A non-transitory computer-readable storage medium storing instructions that, when executed, cause a first device to perform operations comprising:
obtaining information related to a resource for sidelink-synchronization signal block (S-SSB);
obtaining information on a first time domain for a first cyclic prefix extension (CPE) related to S-SSB transmission;
performing the first CPE during the first time domain before the S-SSB transmission; and
performing the S-SSB transmission based on the resource.

17. A method for performing wireless communication by a second device, the method comprising:
obtaining information related to a resource for sidelink-synchronization signal block (S-SSB); and
receiving, from a first device, the S-SSB based on the resource,
wherein, before the resource, during a first time domain for a first cyclic prefix extension (CPE) related to S-SSB transmission, the first CPE is performed by the first device.

18. A second device adapted to perform wireless communication, the second device comprising:
at least one transceiver;
at least one processor; and
at least one memory connected to the at least one processor and storing instructions that, based on being executed by the at least one processor, cause the second device to perform operations comprising:
obtaining information related to a resource for sidelink-synchronization signal block (S-SSB); and
receiving, from a first device, the S-SSB based on the resource,
wherein, before the resource, during a first time domain for a first cyclic prefix extension (CPE) related to S-SSB transmission, the first CPE is performed by the first device.

19. A processing device adapted to control a second device, the processing device comprising:
at least one processor; and
at least one memory connected to the at least one processor and storing instructions that, based on being executed by the at least one processor, cause the second device to perform operations comprising:
obtaining information related to a resource for sidelink-synchronization signal block (S-SSB); and
receiving, from a first device, the S-SSB based on the resource,
wherein, before the resource, during a first time domain for a first cyclic prefix extension (CPE) related to S-SSB transmission, the first CPE is performed by the first device.

20. A non-transitory computer-readable storage medium storing instructions that, when executed, cause a second device to perform operations comprising:
obtaining information related to a resource for sidelink-synchronization signal block (S-SSB); and
receiving, from a first device, the S-SSB based on the resource,
wherein, before the resource, during a first time domain for a first cyclic prefix extension (CPE) related to S-SSB transmission, the first CPE is performed by the first device.
